(19) Europäisches Patentamt

European Patent Office

Office européen des brevets

(11) **EP 4 481 975 A1**

(12) **EUROPEAN PATENT APPLICATION**

(43) Date of publication:
**25.12.2024 Bulletin 2024/52**

(21) Application number: **23180423.8**

(22) Date of filing: **20.06.2023**

(51) International Patent Classification (IPC):
**H02J 3/32** (2006.01)  **H02M 7/797** (2006.01)

(52) Cooperative Patent Classification (CPC):
**H02J 3/32;** H02M 7/4835; H02M 7/797

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Universität der Bundeswehr München
85579 Neubiberg (DE)**

(72) Inventors:
• **Lesnicar, Anton
82211 Herrsching am Ammersee (DE)**
• **Weyh, Thomas
80637 München (DE)**
• **Eckerle, Richard
80637 München (DE)**

(74) Representative: **Lucke, Andreas
Boehmert & Boehmert
Anwaltspartnerschaft mbB
Pettenkoferstrasse 22
80336 München (DE)**

(54) **A SYSTEM AND METHOD FOR PROVIDING AC PHASE VOLTAGES AND CURRENTS WITH REDUCED LOSS**

(57)     Disclosed herein is a system (20) for storing energy and providing N AC phase voltages. The system (20) comprises N pairs of modular energy storage direct converter systems (MESDCS) (22), wherein the first ends of the first MESDCS (22-1, 22-2, 22-3) of each of said N pairs are connected to a first common external terminal (32), the first ends (24) of the second MESDCS (22-4, 22-5, 22-6) of each of said N pairs are connected to a second common external terminal (34), and the second ends (26) of the j-th pair of MESDCS (22) are connected to a common j-th phase terminal (28-j), with j = 1, ...,N. The N pairs of MESDCS (22) are controlled such that a predetermined external voltage or voltage pattern $U_o$ is provided between said first and second common external terminals (32, 34), and such that at each of said N common phase terminals (28-j), a corresponding AC phase voltage is applied. A time-dependent offset Uoff(t) that is common to each of said phase voltages Uj, is applied that allows for reducing battery losses in the system.

Fig. 7

EP 4 481 975 A1

**Description**

FIELD OF THE INVENTION

The present invention is in the field of power supplies for electrical devices such as electrical motors. More particularly, the present invention relates to a system and method for storing energy and providing N bipolar AC - phase voltages based on modular energy storage direct converter systems that allow for reduced losses by the energy storage elements.

BACKGROUND OF THE INVENTION

Battery-powered systems have increased in importance in various fields of technology, including electric mobility, where battery systems form a key component for the mobility of the future. In order to make use of the energy stored in a battery system, an additional power electric converter is usually needed, which may serve for stabilizing the output voltage or for generating a desired phase of an alternating voltage.

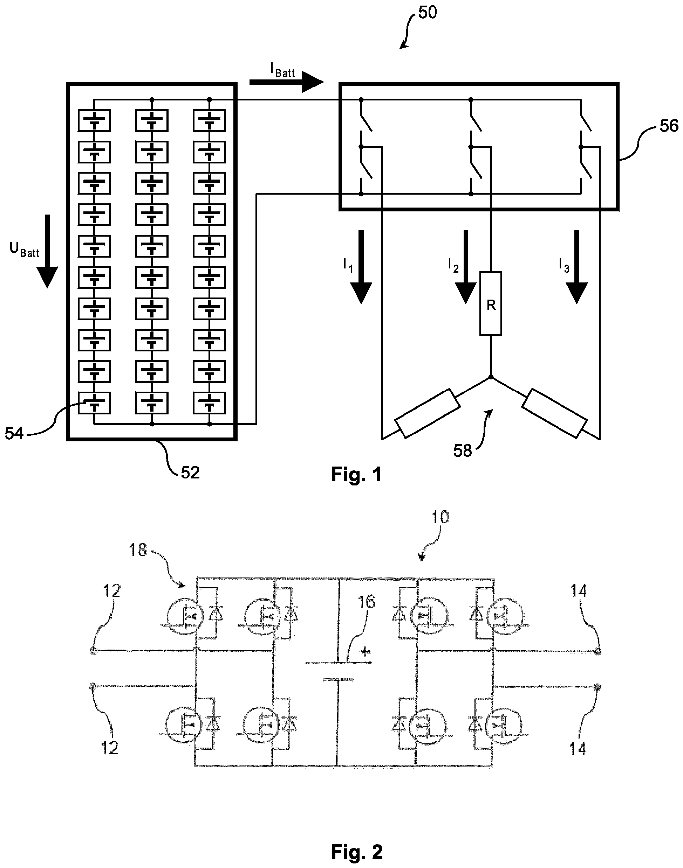

An example of such battery-powered system 50 is shown in Fig. 1. The system comprises a battery block 52 comprising a plurality of batteries 54. As shown in Fig. 1, a plurality of batteries 54 are connected in series, and several series connections of batteries 54 are connected in parallel, such as to collectively provide a DC power source providing a fixed DC voltage. Further shown is a converter, formed by a B6 bridge 56, which converts, via pulse width modulation (PWM), the DC battery voltage into three AC phase voltages that are provided to an electrical consumer 58, which in Fig. 1 is represented by three resistors connected in star topology. This construction is currently used in state-of-the-art electric vehicles, where the electrical consumer 58 would be the electric motor thereof.

While the combination of block battery and converter shown in Fig. 1 is very simple, it comes with a number of disadvantages. Since the individual battery cells that make up the block battery have slightly different properties, the weakest cell in each case determines the maximum state of charge or the minimum state of discharge. This means that not all the storable energy of the block battery can be used. The problem of unequal states of charge can be mitigated by a so-called battery management system (BMS), which ensures that in a network of batteries, those with a higher charge are selectively discharged. However, this energy cannot be used, but is lost as heat. Furthermore, it is hardly possible to replace individual cells of such a battery in the event of a fault, since the original cell and the replacement cell will generally have different properties, not coming from the same batch. For this reason, great care is taken in the manufacture of such block batteries to ensure that all the cells used have similar properties as far as possible. In practice, this leads to a substantial number of unusable cells simply because their capacities do not lie within the very narrow required tolerance band.

The additional converter, such as the B6 bridge 56 point Fig. 1, operates according to the PWM method and thus generates relatively high harmonic voltages and currents; this gives rise to EMC problems which are technically complex to suppress. The ripple of the current on the DC side (where the block battery is located) causes additional losses in the battery. These losses can in principle be mitigated by smoothing the current from the B6 bridge, but this requires large and expensive components (capacitors and smoothing reactors). Also, connecting the B6 bridge directly to the power grid (to charge the battery) is usually not possible because of the harmonic content. Instead, in most applications, an additional charging circuitry is needed.

Finally, the fast switching of relatively high voltages (e.g. several 100 V in case of electric vehicles) in the B6 bridge leads to relatively high switching losses in this converter.

As an important alternative to the system of Fig. 1, in DE 10 2014 110 410 A1, a modular energy storage direct converter system (MESDCS) was proposed which combines the storage capacity of batteries with the topology of a multilevel converter. The MESDCS comprises one or more converter arms each comprising a plurality of cascaded modules, wherein each module comprises an energy storage element, such as a battery, and a plurality of module switches allowing for selectively connecting energy storage elements of adjacent modules in series, and depending on the specific design, further allowing to connect energy storage elements of adjacent modules in one or more of anti-series, in parallel or in a "deactivated state" where the energy storage element is bypassed in the series connection. The generic term "modular energy storage direct converter system" used herein derives from the fact that it is "modular" by being built up of modules, is capable of storing energy by means of energy storage elements provided in said modules, and is a "direct converter system" in as much as it is designed to actuate the module switches in such way that the converter arm as a whole already supplies a desired output voltage, such that no additional converter is needed. Indeed, the MESDCS can generally provide arbitrary DC output voltages or AC output voltage waveforms by means of actuating at least a part of said plurality of module switches.

It is worth noting that the same flexibility as with regard to the output voltages exists for the charging of the energy storage elements, which can be charged with practically any voltage applied across the converter arm, including both DC and AC voltages. So unlike Fig. 1, no additional charging circuitry is necessary.

The MESDCS as disclosed in the above-referenced DE 10 2014 110 410 A1 has a number of important advantages. For example, since the voltages associated with each individual energy storage element can be comparatively low, the module switches do not have to switch high voltages. This for example allows for using standard low-voltage silicon MOSFETs instead of more expensive and lossy IGBTs or silicon carbide-MOSFETs. Moreover, switching of lower voltages by the module switches allows for a better electromagnetic compatibility and reduced total harmonic distortion.

DE 10 2014 110 410 A1 also shows how a MESDCS can be used for three-phase electric power systems. For coupling the MESDCS with a three-phase current load, the converter arms are connected either in star topology or ring topology. Since the batteries that may be used in the modules as energy storage elements may have an appreciable internal resistance, this document proposes to switch modules in parallel if smaller overall output voltages are needed, to thereby decrease the total resistance of the converter arm. Note that wherever reference is made herein to switching "modules in parallel/in series" this is to be understood as a short way of saying that the energy storage elements of the modules are switched in parallel/in series.

Fig. 2 shows an individual module 10 corresponding to the module shown in Fig. 7 of DE 10 2014 110 410 A1 which comprises two first terminals 12, two second terminals 14, an energy storage element 16 and a total of eight switches 18, arranged in two half bridges on both sides of the energy storage element 16. The module allows for selectively switching the energy storage elements 16 of adjacent modules 10 selectively in series, in anti-series (i.e. with reversed polarity), in parallel, and to selectively "deactivate" the energy storage element 16 by bypassing it in a series connection of the energy storage elements 16 of the adjacent modules on both sides.

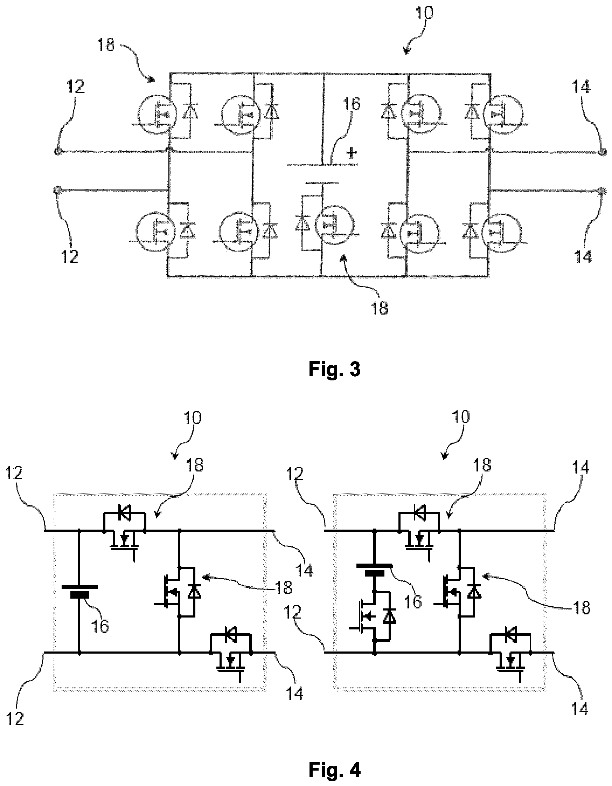

Fig. 3 shows a further module 10 having a ninth switch 18 directly adjacent to the energy storage element 16, which allows to switch modules in parallel which are separated by an arbitrary number of deactivated modules (modules with bypassed energy storage elements) of the same type. The modules 10 Fig. 1 and 2 are so called four-quadrant modules, since they can operate in all four quadrants of the voltage-current plane. However, the flexibility of the modules of Fig. 2 and 3 comes at the price of a large number of module switches 18 and corresponding switching effort.

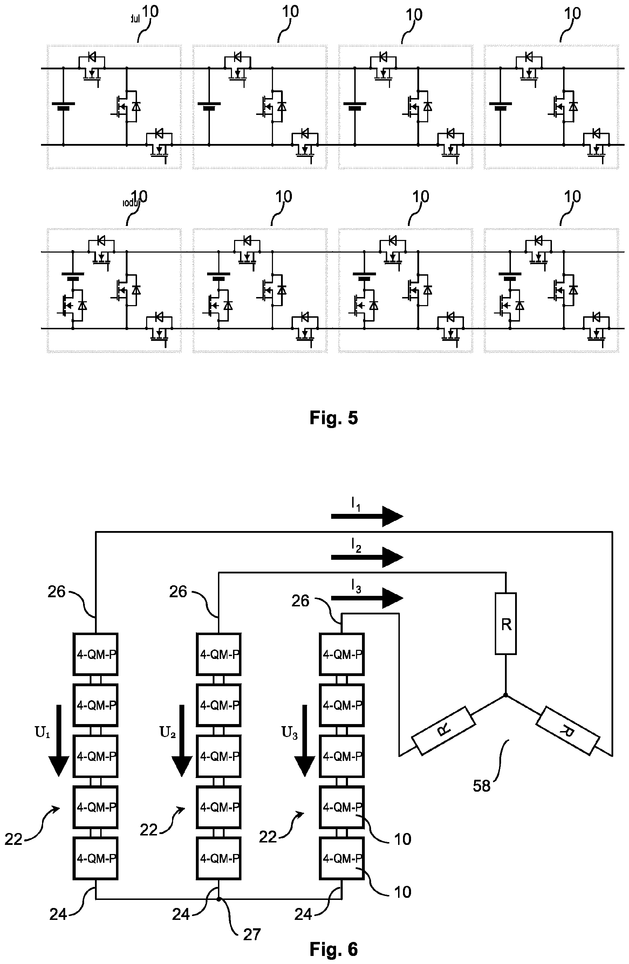

Fig. 4 shows two alternative modules 10, likewise comprising two first terminals 12, two second terminals 14, an energy storage element 16, but only three (left module) and four (right module) semiconductor switches, respectively. Fig. 5 shows four three-switch modules 10 (upper part of figure) and four four-switch modules 10 (lower part of figure) connected one behind the other such as to form part of a converter arm. The three-switch module 10 shown on the left of Fig. 4 allows for connecting the energy storage elements 16 of adjacent modules selectively in series and in parallel, and to bypass it in a series connection. However, it does not permit connecting adjacent modules in anti-series, i.e. changing the polarity of the energy storage element 16 in the series connection, nor does it allow to bypass the energy storage element 16 in a parallel connection of its adjacent modules, which however is possible with the four-switch module shown on the right of Fig. 4.

Fig. 6 shows a system for storing energy and providing three AC phase voltages to an electrical consumer 58, which is again represented by three resistors in star configuration, using three MESDCS (22), each having a first and 24 connected to a common star point 27 and a second end 26 at which a corresponding phase voltage is provided. In Fig. 6, is seen that again each MESDCS (22) comprises a plurality of sequentially interconnected modules 10. In Fig. 6, the modules are denoted by "4-QM-P", to indicate that the modules are four-quadrant modules allowing for parallel connection. Such a system and its operation are for example described in more detail in EP 3 859 964 A1.

While the MESDCS has many attractive features as compared to ordinary block batteries and converters as shown in Fig. 1, one problem remaining are the battery losses associated with the internal resistance $R_o$ of each battery and the current associated with it. For example, considering a battery having a voltage $U_o$ is subjected to a pure DC current $I_o$ load, the battery power $P$ amounts to

$$P = U_0 \cdot I_0.$$

The battery loss $P_{V1}$ then follows from the current $I_o$ as follows:

$$P_{V1} = R_0 \cdot I_0^2$$

It is readily apparent that the battery losses occurring when transferring a certain amount of charge across the battery resistance $R_o$ is minimum if the current is constant over time. For example, when the same amount of charge is transferred at half time but twice the current, the battery loss will be twice as high.

However, in an MESDCS, which is controlled such as to output an overall AC voltage, the currents in each of the energy storage element (typically batteries) will vary under operation, such that the battery losses will inevitably be higher than if the same total current supplied by modules subjected to constant current.

For illustration purpose, the case shall be considered in which a single AC voltage U(t) shall be provided by a battery via a converter in which the time average power $P_{av}$ again corresponds to the product of $I_o$ and $U_o$:

$$P(t) = U_0 \cdot \sqrt{2} \cdot sin(\omega t) \cdot I_0 \cdot \sqrt{2} \cdot sin(\omega t) = 2 \cdot U_0 \cdot I_0 \cdot (sin(\omega t))^2$$

In this case, the time average power is the same as above:

$$P_{av} = 2 \cdot U_0 \cdot I_0 \cdot \frac{1}{2\pi} \int_0^{2\pi} (sin(\omega t))^2 dt = 2 \cdot U_0 \cdot I_0 \cdot \frac{1}{2\pi} \cdot \left| \frac{x}{2} - sin(x) \cdot cos(x) \right|_{x=0}^{x=2\pi}$$

$$= U_0 \cdot I_0$$

The converter that generates the AC voltage from the DC battery voltage will typically subject the battery to a periodic load, so that the currents in the batteries vary in time, thereby leading to increased battery losses. These battery current variations can only be avoided if additional large energy storage elements, such as capacitors, are provided that buffer the current, to thereby lead to constant battery currents. The "theoretical minimum loss" (also referred to as "100% loss" in the following) for providing a certain output power would be the battery loss obtained if indeed all battery cells were subjected to constant battery currents.

Without such additional energy storage and "smoothing" equipment, the converter will draw an oscillating power from the battery. Since the battery voltage $U_0$ is constant, the load current at the battery must oscillate, and would have the following functional relationship:

$$I(t) = 2 \cdot I_0 \cdot (sin(\omega t))^2,$$

such as to again yield the above power function P(t). In this case, the battery losses $P_{V2}$ (t) will be as follows:

$$P_{V2}(t) = R_0 \cdot \left( I(t) \right)^2 = 4 \cdot R_0 \cdot I_0^2 \cdot (sin(\omega t))^4$$

The time average of the battery losses over a full cycle are then found to be :

$$P_{V2,av} = 4 \cdot R_0 \cdot I_0^2 \cdot \frac{1}{2\pi} \int_0^{2\pi} (sin(\omega t))^4 dt =$$

$$= 4 \cdot R_0 \cdot I_0^2 \cdot \frac{1}{2\pi} \cdot \left| \frac{3x}{8} - \frac{3}{8} cos(x) \cdot sin(x) - \frac{1}{4} cos(x) \cdot (sin(x))^3 \right|_{x=0}^{x=2\pi} =$$

$$= 4 \cdot R_0 \cdot \frac{3}{8} I_0^2 = 1,5 \cdot R_0 \cdot I_0^2$$

It is hence seen that for the same output power, the battery losses obtained are 50% higher than the losses $P_{V1}$ in a pure DC current case. This increase in losses is due to the varying current and the fact that the battery losses scale with the square of the current.

Without a smoothing in the converter using large capacitors, this increased battery loss cannot be avoided.

In the converter system of Fig. 1 above, the situation is more favorable since the total power of the three phases is constant over time. Thus, using the B6 bridge of Fig. 1, it is theoretically conceivable to subject the battery to a constant current and to hence obtain the "theoretical minimum battery loss" (100%). However, this would require that a DC-intermediate circuit would have to perfectly smooth the PWM ripple, which in practice is not possible. Accordingly, the battery losses in the system of Fig. 1 comprising a block battery and a B6-bridge converter will have battery losses significantly above 100%.

SUMMARY OF THE INVENTION

The problem underlying the invention is to provide a system and method for storing energy and providing a number of N AC phase voltages with which allows for reducing battery losses. This problem is solved by a system according to claim 1 and a method according to claim 21. Favorable embodiments are described in the dependent claims.

According to an aspect of the present invention, a system for storing energy and providing N AC phase voltages $U_j$, with j =1, ... N, and corresponding phase currents to an electrical consumer (36) connected or connectable to said system (20) is provided. Herein, N is an integer number with $N \geq 2$, said system (20).

The system comprises N pairs of modular energy storage direct converter systems (MESDCS) and a control system. Each MESDCS comprises a converter arm having a first end and a second end and comprising a plurality of sequentially interconnected modules. Each module comprises at least two first terminals and at least two second terminals, a storage element for electrical energy, in particular a battery or a supercapacitor, and a plurality of module switches.

In operation, an "energy storage element loss" is associated with each energy storage element, wherein said energy storage element loss is at least in part dependent on the current associated with the respective energy storage element. If the energy storage elements are formed by batteries, then this "energy storage element loss" could correspond to the "battery losses" discussed above.

In each two adjacent modules, each of the at least two first terminals of one module is connected either directly or via an intermediate component to a corresponding one of the at least two second terminals of the other module, wherein under control of said control system, said plurality of module switches allow for

- connecting energy storage elements of adjacent modules in series,
- selectively deactivating or bypassing the energy storage element of each module, and
- connecting energy storage elements of adjacent modules in parallel.

Moreover, said plurality of module switches or an additional switching arrangement allow for reversing the polarity of a series connection of energy storage elements.

Each pair of MESDCS comprises a first MESDCS and a second MESDCS, wherein

- the first end of the first MESDCS of each of said N pairs of MESDCS is connected to a first common external terminal,
- the first end of the second MESDCS of each of said N pairs of MESDCS is connected to a second common external terminal, and
- the second ends of the j-th pair of MESDCS are connected to a common j-th phase terminal, with j = 1, ...,N.

Said control system is configured to control the N pairs of MESDCS such that

- a predetermined external voltage or voltage pattern $U_o$ is provided between said first and second common external terminals, and
- such that at each of said N common phase terminals, a corresponding AC phase voltage $U_j$ relative to said first common external terminal (32) is applied, with j =1... N.

Herein, said phase voltages $U_j$ can be decomposed into a periodic AC function $U_{P,j}(t)$ and a common, time-dependent offset $U_{off}(t)$ that is common to each of said phase voltages $U_j$, such that $U_j = U_{P,j}(t) + U_{off}(t)$, wherein both voltages $U_{P,j}(t)$ and $U_{off}(t)$ are relative to said first common external terminal (32).

The periodic AC functions $U_{P,j}(t)$ associated with different phase voltages $U_j$ are phase-shifted copies of each other such that for each integers i, j chosen from [1,...,N] with $i \neq j$, and k chosen from [1,...,N-1], the following relation holds:

$$U_{P,i}(t) = U_{P,j}(t + k \cdot T/N),$$

wherein T is the period of said periodic AC functions $U_{P,j}(t)$, and wherein preferably, $U_{P,i}(t) = U_{P,j}(t + (i - j) \cdot T/N)$.

A pattern of said common, time-dependent offset $U_{off}(t)$ is chosen such that in operation, a "total loss", which in the present disclosure is defined as the sum of the energy storage element losses of all modules comprised in any of the N pairs of MESDCS (22) during a full cycle of duration T of said periodic AC functions $U_{P,j}(t)$, is smaller than in an operation with the same periodic AC functions $U_{P,j}(t)$, the same phase currents, and the same external voltage or voltage pattern $U_o$, but without such common, time-dependent offset $U_{off}(t)$. In the remainder of the description and the appended claims, the expression "total loss" is used as a short version of the above definition. Thus, while the expression "total loss" could seem to suggest that all losses associated with the modules are concerned, including e.g. the losses in the switching elements provided in the modules, in the expression "total loss" as used herein, only the contribution of all the energy storage element losses, e.g. "battery losses" are meant. This is because the present invention is mainly concerned with reducing precisely these types of losses. Note that the losses associated with the switches comprise two contributions, namely losses due to the switching and losses due to the resistivity associated with the switches in the conducting state ("ohmic losses" in the following). Unlike conventional converters such as the one shown in Fig. 1, in a MESDCS, the switching losses are very small and can practically be neglected. In some cases the ohmic losses state can be calculated and optimized in a similar manner as the battery losses.

The inventors found that surprisingly, with this topology and control of the phase voltages, the "total loss" as defined above can be dramatically reduced. Note in prior art document EP 3 859 3 964 A1, the present inventors have previously suggested as co-inventors an MESDCS-based system for providing N phase voltages, however using only N (rather than 2N) MESDCS, connected in a star configuration, similar to what is shown in Fig. 6 for N = 3. In this document too, it was suggested to add a common offset to the individual phase voltages, which was chosen in a deterministic way such as to reduce the difference between the maximum and minimum values acquired during a full period T. The rationale behind this approach was to either save in the number of modules necessary to provide the peak phase voltages, or to reduce battery losses for a given number of modules, where the saving of battery losses is achieved by generating more opportunities to connect modules in parallel (and thereby reducing the overall resistance).

However, the present invention makes use of a different approach which turns out to allow for an even higher reduction of the "total loss" as possible with the scheme of EP 3 859 3 964 A1. One important difference is that system of the invention employs N pairs, i.e. 2N MESDCS for providing N phase voltages, where the second ends of each pair of MESDCS are connected to a same, common phase terminal. Moreover, the first end of each first MESDCS of each pair are connected to a first common external terminal, and the first end of each second MESDCS of each pair are connected to a common external terminal. In addition, the control system is configured to control the MESDCS such that a predetermined external voltage or voltage pattern $U_o$ is provided between said first and second common external terminals. In other words, the control ensures that the voltage across the first MESDCS of each pair corresponds to the corresponding phase voltage, and that it each time, the voltages across both MESDCS add up to $U_o$. In order to reduce the "total loss" by appropriate control of the MESDCS, one therefore has generally two degrees of freedom, namely the proper choice of the external voltage or voltage pattern $U_o$ as well as the proper choice of the time-dependent offset $U_{off}(t)$ that is common to each of said phase voltages $U_j$. According to the invention as claimed in claim 1, the time-dependent offset $U_{off}(t)$ is chosen to reduce the "total loss" for a given voltage or voltage pattern $U_o$, such as to at least be lower than if this time-dependent offset $U_{off}(t)$ was omitted. In practical applications, this time-dependent offset $U_{off}(t)$ will be the result of an optimization process for minimizing the "total loss". In this different topology, the time-dependent offset $U_{off}(t)$ suitable for reducing the "total loss" are of course very different from the ones suggested in EP 3 859 3 964 A1. There are, to the knowledge of the inventors, no deterministic ways of defining suitable offsets, and certainly not following simple rules such as reducing the overall amplitude during one cycle.

The inventors found that with the claimed topology, the "total loss" can be reduced over the loss is encountered in e.g. the system of Fig. 6 and even using the improve control described in EP 3 859 3 964 A1, even if the same total number of modules are used. This is a surprising and counterintuitive approach, that is also against the rationale of EP 3 859 3 964 A1, which would rather have suggested to increase the number of modules in each single MESDCS, to thereby allow for more frequent opportunities to connect modules in parallel.

In the above definition of the system of the invention, the expression "in operation" refers to a situation in which an actual electrical consumer is connected to the system, such as, without limitation, an electrical motor of an electric vehicle. Namely, the system must be connected to some sort of load such that currents may flow into and out of the system. Still, this additional electrical consumer is not part of the claimed system. As the skilled person will appreciate, it is really the control of the system and its MESDCS that defines the "operation" of such electrical consumer, and to establish certain desired operation states, wherein such operation states can e.g. be characterized by the amplitudes and frequencies of the periodic AC functions $U_{P,j}(t)$ to be applied to an electrical consumer connected or to be connected with said system (20), the amplitudes of phase currents to be applied to said electrical consumer connected or to be connected with said system, and the like, and this operation is hence reflected in the control program or strategy of the control system, irrespectively of whether the consumer is connected to the system or not.

Note that the topology employed in the invention my at first sight look similar to topology known from converters, such as the converter shown in Fig. 7 of WO 2010/149200 A1 for converting a DC voltage divided from a DC network three AC phase voltages. For this purpose, the converter likewise comprises three pairs of converter arms, each comprising a number of cascaded switchable modules, wherein said pairs of converter arms are connected between the DC terminals of the DC network with their first ends and provide a phase voltage at their second ends. However, this prior art shows an ordinary converter, that constantly draws power from the DC network and only converts this power to DC voltages and currents. Accordingly, the converter of WO 2010/149200 A1 can only provide the AC phase voltages while is connected to the DC network. In contrast to this, the system of the invention is a system for storing energy, in addition to providing phase voltages and corresponding phase currents to an electrical consumer. The energy is stored in the energy storage elements, such as batteries or supercapacitors included in the modules, phase voltages and phase currents to such consumer without receiving any power via the first and second common external terminals. Instead, the system of the invention may actually provide power to electrical consumers simultaneously both, via the phase terminals and the common external terminals.

Systems according to embodiments of the invention, due to their energy storing capacity, serve as a chargeable power source, which after charging of its energy storage elements (e.g. batteries or supercapacitors) allow for supplying power to the consumer connected thereto in a self-contained manner, without being connected to an additional network or power source.

In addition, in the converter topology of topology WO 2010/149200 A1, each module only has one first terminal and one second terminal, and no possibility for connecting modules in parallel.

In practice, the time-dependent offset $U_{off}(t)$ will be the result of some numerical optimization scheme that leads to the largest reduction in the "total loss" as defined above. However, the procedure for determining optimized patterns for the offset $U_{off}(t)$ in itself is not part of the claimed system or method, and it goes without saying that the invention can also be employed in an advantageous way if the potential for total loss reduction is not exhausted entirely, i.e. if not the truly optimum pattern for the common, time-dependent offset $U_{off}(t)$ for the operation in question is used.

In some embodiments, the pattern of said time-dependent offset $U_{off}(t)$ is chosen such that in operation, said total loss is smaller than the total loss in a comparative operation with the same periodic AC functions $U_{P,j}(t)$, the same phase currents, and the same external voltage or voltage pattern $U_o$, but without such common, time-dependent offset $U_{off}(t)$, by at least 10%, preferably by at least 15%, and most preferably by at least 20%. Accordingly, in some embodiments of the invention, the pattern of said time-dependent offset $U_{off}(t)$ may be any pattern that allows for the aforementioned decrease in total loss, as compared to an "ordinary control", where the phase voltages only respond to the periodic AC functions $U_{P,j}$ (t) defined above, i.e. without any additional offset $U_{off}(t)$ and under the provision that the same external voltage or voltage pattern $U_o$.

In a preferred embodiment, the control system 30 is configured to control, in operation, the N pairs of MESDCS (22) for establishing an external voltage or voltage pattern $U_o$ and a pattern of said common, time-dependent offset $U_{off}(t)$ that are suitable to keep the total loss at or below 150%, preferably at or below 140% and most preferably at or below 130% of a theoretical minimum total loss. Herein, said theoretical minimum total loss corresponds to the total loss that would be obtained if each of the energy storage elements were subjected to a constant average current, said constant average current corresponding to mean of the time-averaged currents associated with each of said energy storage elements in all modules comprised in any of the N pairs of MESDCS (22) during a full cycle of duration T during the actual operation.

As will be demonstrated with reference to explicit embodiments below, by properly choosing both, the external voltage or voltage pattern $U_o$ and a pattern of said common, time-dependent offset $U_{off}(t)$, the "total loss" can be reduced such as to approach the theoretical minimum loss to the extent defined above. Again, it is not necessary that both, $U_o$ and $U_{off}(t)$ are optimized to give the lowest possible total loss. In particular, there may be practical considerations to refrain from choosing the optimum voltage pattern $U_o$, or from choosing the optimum voltage pattern $U_o$ at all times, for example if a certain DC voltage is desired in addition to the phase voltages, for example for providing DC power for additional consumers in an electric vehicle. However, in preferred embodiments of the invention, both, the external voltage or voltage pattern $U_o$ and a pattern of said common, time-dependent offset $U_{off}(t)$ are chosen such as to provide at least the reductions in total loss as stated above.

As mentioned before, to the knowledge and current understanding of the inventors, there is no deterministic way of defining suitable patterns of said time-dependent offset $U_{off}(t)$ that will lead to the desired savings in total loss. Instead, to the knowledge of the inventors, the most suitable patterns of said time-dependent offset $U_{off}(t)$ need to be determined in an optimization procedure, and the resulting $U_{off}(t)$ patterns or waveforms will look quite different depending on the operation state of the system. Accordingly, in preferred embodiments, the control system is configured for providing, in operation, different patterns of said common, time-dependent offset $U_{off}(t)$, said patterns depending on the operation state of said system.

Herein, said operation state may be, at least in part, characterized by one or more of

- the amplitudes of periodic AC functions $U_{P,j}(t)$ to be applied to an electrical consumer connected or connectable with said system,
- the amplitudes of phase currents to be applied to said electrical consumer connected or connectable with said system, or another quantity related thereto,
- the external voltage or voltage pattern $U_o$ provided between said first and second common external terminals,
- a phase angle $\varphi$ between the current and the voltage of each phase, and
- a voltage of the storage element for electrical energy.

In a preferred embodiment, said control system comprises or is connected with a memory storing different patterns of said common, time-dependent offset $U_{off}(t)$ to be selected, in operation, depending on a current operation state. Accordingly, different patterns or waveforms of $U_{off}(t)$ leading to optimum (or at least approximately optimum) losses can be determined for different operating states in advance and stored in the memory, and then selected during operation.

In preferred embodiments, said time-dependent offset $U_{off}(t)$ pattern is a periodic function, which has a period of T/N.

In a preferred embodiment, said time-dependent offset $U_{off}(t)$ pattern is chosen such that in a given operation state, defined by

- a set of AC functions $U_{P,j}(t)$ to be applied to an electrical consumer connected or connectable with said system (20),

- the amplitudes of phase currents to be applied to said electrical consumer connected or connectable with said system, or another quantity related thereto, and
- the external voltage or voltage pattern $U_o$ provided between said first and second common external terminals (32, 34),

the total loss is at least approximately minimized, or exceeds the minimum total loss obtainable in this given operation state by any different pattern of $U_{off}(t)$ by less than 15 %, preferably less than 10 %.

In a preferred embodiment, said external voltage $U_o$ is a constant DC voltage, the inventors have confirmed that with this choice of external voltage, and appropriately chosen time-dependent offset $U_{off}(t)$, significant reduction in the "total loss" can be achieved. This external DC-voltage can then be used for providing DC power to further consumers, as desired. For example, if the systems used in an electric vehicle, the phase voltage can be used for powering the electric motor and the DC voltage can be used for powering the air conditioning or the like. As will be demonstrated below, in preferred embodiments, the value of the DC voltage should be carefully chosen, since this choice will again decide on the degree of savings in the "total loss". If the desired DC voltage for the further consumer and the DC voltage preferable for the reduction of the "total loss" should per se not match, it may be advisable to provide additional circuitry, for example a simple voltage doubling or voltage splitting circuit, to cover the voltage gap, rather than an using an external DC voltage $U_o$ that leads to higher total loss than necessary.

In alternative embodiments, however, said external voltage $U_o$ is a time-dependent pattern, having a period $T_o$, wherein the period T of said periodic AC functions $U_{P,j}(t)$ is preferably an integer multiple of $T_o$, such that $T_o = T/m$, with m being an integer, wherein preferably m = N. The inventors found that with these types of time-dependent external voltage patterns or waveforms, and even further reduction of the "total loss" is possible. It is also possible to switch between DC voltages $U_o$ and time of dependent voltages $U_o$ under control of said control system. For example, in an electric vehicle, it would be possible to switch during operation of the vehicle into an "energy saving mode", in which a time-dependent external voltage $U_o$ is temporarily used for optimum reduction of the "total loss", possibly at the price of switching off the air conditioning or the like.

In preferred embodiments, said external voltage $U_o$ is a square wave alternating between discrete values, and in particular alternating between a predetermined value $U_{o,max}$ and zero, referred to as an example of a "unipolar external voltage" herein, or alternating between $U_{o,max}$, zero, and $-U_{o,max}$, which is an example of a "bipolar external voltage" as understood in the present disclosure. Please note that due to the symmetry of the MESDCS 22, the losses associated with $U_{o,max}$ and $-U_{o,max}$ are identical. This fact can be exploited by choosing among the unipolar and bipolar external voltages, depending on which choice is preferable for the energy supply of an additional consumer by said external voltage. In some embodiments, the bipolar external voltage can be combined with a voltage doubling circuit, such that a DC voltage of 2 $\cdot U_{o,max}$ can be provided. In some embodiments, the control changes between unipolar and bipolar external voltages depending on the operating state. For example, in operation states in which the amplitude of the periodic AC functions $U_{P,j}(t)$ is comparatively high, the system may be controlled such as to produce a unipolar external voltage, whereas in operation states in which the amplitude of the periodic AC functions $U_{P,j}(t)$ is comparatively low, one may choose a bipolar external voltage, as will become more apparent from a specific example described below. Please further note that unipolar/bipolar external voltages need not be square wave voltages. Instead, any time-varying external voltage which changes its sign (polarity) is regarded as a "bipolar external voltage".

As mentioned before, the proper choice for the time-dependent pattern for the external voltage $U_o$ can be determined in an optimization procedure. However, again, this optimization procedure itself is not part of the claimed system method claimed, and advantageous embodiments of the event related to cases where the choice for $U_o$ may not be the true optimum, but still reasonably close to a true optimum or at least a significant improvement over a a less educated choice.

Accordingly, in a preferred embodiment, said time-dependent pattern for the external voltage $U_o$ is such that in a given operation state, defined by

- a set of AC functions $U_{P,j}(t)$ to be applied to an electrical consumer connected or connectable with said system (20), and
- the amplitudes of phase currents to be applied to said electrical consumer connected or connectable with said system,

the total loss is smaller than in an operation with the same periodic AC functions $U_{P,j}(t)$ and the same phase currents, but with an external DC voltage $U_o$ constantly kept at a constant value corresponding to 50% of the amplitude of $U_{P,j}(t)$ and with a time-dependent offset $U_{off}(t)$ optimized for reducing said total loss, and in particular smaller by at least 5%, preferably by at least 10%, and most preferably by at least 15%. In this case, the time-dependent pattern for the external voltage $U_o$ is characterized by the improvement in total loss over a reasonable "comparative operation", in which the external voltage $U_o$ is a DC voltage, kept at a constant value corresponding to 50% of the amplitude of $U_{P,j}(t)$. In this "comparative operation", the time-dependent offset $U_{off}(t)$ is then optimized for reducing said total loss for this given external DC voltage, to allow for a fair comparison. With this comparison, the additional improvement by making the more advantageous choice for the time-dependent pattern for the external voltage can be estimated.

In a preferred embodiment, said control system comprises or is connected with a memory storing different time-dependent patterns for the external voltage $U_o$ to be selected, in operation, depending on one or both of

- the amplitudes of periodic AC functions $U_{P,j}(t)$ to be applied to an electrical consumer connected or connectable with said system (20), and
- the amplitudes of phase currents to be applied to said electrical consumer connected or connectable with said system, or another quantity related thereto.

Similar to the different patterns for the time-dependent offset $U_{off}(t)$, it is also possible to determine advantageous time-dependent patterns for the external voltage $U_o$ for different operation scenarios in advance and store them in a memory. Herein, the "different operation scenarios" may be characterized by the amplitudes of periodic AC functions $U_{P,j}(t)$ and of the phase currents to be applied to an electrical consumer.

In preferred embodiments, the periodic AC functions have a sinusoidal waveform, e.g. $U_{P,j}(t) = A \cdot \sin(\omega t + (j-1) \cdot 2\pi/N)$, with A being a voltage amplitude and $\omega$ an angular frequency.

As mentioned before, according to the invention, it is necessary that plurality of module switches or an additional switching arrangement allow for reversing the polarity of a series connection of energy storage elements. In one embodiment, said plurality of module switches allow for connecting energy storage elements (16) of adjacent modules (10) in anti-series, wherein the anti-series connection of an energy storage element (16) corresponds to a series connection with reversed polarity. modules with this switching capability are also referred to as "4-quadrant-modules" in the art, since they allow for operation in all four quadrants of the voltage-current-plane.

In alternative embodiments, an additional switching arrangement is provided for each of said MESDCS (22), allowing for selectively reversing the connection of its first and second ends, respectively. This "additional switching arrangement" is an example of the aforementioned arrangement "for reversing the polarity of a series connection of energy storage elements". With this additional switching arrangement, is also possible to use 2-quadrant-modules, that by themselves do not allow for an "anti-series" connection.

In a preferred embodiment, said plurality of module switches allow for connecting the energy storage elements of two non-adjacent modules, which are separated by one or more modules with deactivated or bypassed energy storage element, in parallel. This allows for full operation of the MESDCS even in a case where one of the energy storage elements is out of function, and further allows for avoiding losses due to balancing currents that could occur if modules with slightly deviating voltages are connected in parallel. Namely, this functionality allows for selecting even nonadjacent modules for parallel connection, and for selecting those modules for parallel connection that currently have most precisely matching voltages, to thereby decrease any losses due to balancing currents.

In preferred embodiments, N = 3.

A further aspect of the invention relates to an electric vehicle, comprising an electric motor having N terminals for supplying electric power and a system according to one of the preceding claims, wherein each of said common phase terminals is connected with a corresponding one of said terminals of said electric motor.

In a preferred embodiment, said first and second common external terminals are connected or connectable for providing electrical power to one or more electrical consumers of said vehicle.

A further aspect of the invention relates to a method for providing N AC phase voltages $U_j$, with j =1, ... N, and corresponding phase currents to an electrical consumer, wherein N is an integer number with $N \geq 2$, using N pairs of modular energy storage direct converter systems (MESDCS),

wherein each MESDCS comprises a converter arm having a first end and a second end and comprising a plurality of sequentially interconnected modules,
wherein each module comprises at least two first terminals and at least two second terminals, a storage element for electrical energy, in particular a battery or a supercapacitor, and a plurality of module switches,
wherein in operation, an energy storage element loss is associated with each energy storage element, wherein said energy storage element loss is at least in part dependent on the current associated with the respective energy storage element,
wherein in each two adjacent modules, each of the at least two first terminals of one module are connected either directly or via an intermediate component to a corresponding one of the at least two second terminals of the other module,
wherein said method comprises operating said plurality of module switches for

- selectively connecting energy storage elements of adjacent modules in series,
- selectively deactivating or bypassing the energy storage element of each module, and
- selectively connecting energy storage elements of adjacent modules in parallel,

wherein said method further comprises operating said plurality of module switches or an additional switching arrangement for reversing the polarity of a series connection of energy storage elements,
wherein each pair of MESDCS comprises a first MESDCS and a second MESDCS, wherein

- the first end of the first MESDCS of each of said N pairs of MESDCS is connected to a first common external terminal,
- the first end of the second MESDCS of each of said N pairs of MESDCS is connected to a second common external terminal, and
- the second ends of the j-th pair of MESDCS are connected to a common j-th phase terminal , with j = 1, ...,N,

wherein the method comprises controlling the N pairs of MESDCS such that

- a predetermined external voltage or voltage pattern $U_o$ is provided between said first and second common external terminals, and
- such that at each of said N common phase terminals, a corresponding AC phase voltage $U_j$ relative to said first common external terminal is applied, with j =1... N,

wherein said phase voltages $U_j$ can be decomposed into a periodic AC function $U_{P,j}(t)$ and a common, time-dependent offset $U_{off}(t)$ that is common to each of said phase voltages $U_j$, such that $U_j = U_{P,j}(t) + U_{off}(t)$, wherein both voltages $U_{P,j}(t)$ and $U_{off}(t)$ are relative to said first common external terminal,
wherein the periodic AC functions $U_{P,j}(t)$ associated with different phase voltages $U_j$ are phase-shifted copies of each other such that for each integers i, j chosen from [1,...,N] with $i \neq j$, and k chosen from [1,...,N-1], the following relation holds: $U_{P,i}(t) = U_{P,j}(t + k \cdot T/N)$, wherein T is the period of said periodic AC functions $U_{P,j}(t)$, and
wherein preferably, $U_{P,i}(t) = U_{P,j}(t + (i - j) \cdot T/N)$, and
wherein a pattern of said common, time-dependent offset $U_{off}(t)$ is chosen such that in operation, a total loss, defined as the sum of the energy storage element losses of all modules comprised in any of the N pairs of MESDCS during a full cycle of duration T of said periodic AC functions $U_{P,j}(t)$, is smaller than in an operation with the same periodic AC functions $U_{P,j}(t)$, the same phase currents, and the same external voltage or voltage pattern $U_o$, but without such common, time-dependent offset $U_{off}(t)$.

In a preferred embodiment, the pattern of said time-dependent offset $U_{off}(t)$ is chosen such that in operation, said total loss is smaller than the total loss in a comparative operation with the same periodic AC functions $U_{P,j}(t)$, the same phase currents, and the same external voltage or voltage pattern $U_o$, but without such common, time-dependent offset $U_{off}(t)$, by at least 10%, preferably by at least 15%, and most preferably by at least 20%.

In a preferred embodiment of the method, the N pairs of MESDCS are controlled for establishing an external voltage or voltage pattern $U_o$ and a pattern of said common, time-dependent offset $U_{off}(t)$ that are suitable to keep the total loss at or below 150%, preferably at or below 140% and most preferably at or below 130% of a theoretical minimum total loss, wherein said theoretical minimum total loss corresponds to the total loss that would be obtained if each of the energy storage elements were subjected to a constant average current, said constant average current corresponding to mean of the time-averaged currents associated with each of said energy storage elements in all modules comprised in any of the N pairs of MESDCS during a full cycle of duration T during the actual operation.

In a further preferred embodiment of the method, different patterns of said common, time-dependent offset $U_{off}(t)$ are applied, depending on the operation state.

In a related embodiment of the method, said operation state is, at least in part, characterized by one or more of

- the amplitudes of periodic AC functions $U_{P,j}(t)$ to be applied to said electrical consumer,
- the amplitudes of phase currents to be applied to said electrical consumer, or another quantity related thereto,
- the external voltage or voltage pattern $U_o$ provided between said first and second common external terminals,
- a phase angle $\varphi$ between the current and the voltage of each phase, and
- a voltage of the storage element for electrical energy.

In addition or alternatively, said method is preferably carried out using a control system comprising or connected with a memory storing different patterns of said common, time-dependent offset $U_{off}(t)$ to be selected depending on a current operation state.

Preferably, said time-dependent offset $U_{off}(t)$ pattern is a periodic function, which has a period of T/N.

In a preferred embodiment, said time-dependent offset $U_{off}(t)$ pattern is chosen such that in a given operation state, defined by

- a set of AC functions $U_{P,j}(t)$ to be applied to said electrical consumer,
- the amplitudes of phase currents to be applied to said electrical consumer, or another quantity related thereto, and
- the external voltage or voltage pattern $U_o$ provided between said first and second common external terminals,

the total loss is at least approximately minimized, or exceeds the minimum total loss obtainable in this given operation state by any different pattern of $U_{off}(t)$ by less than 15 %, preferably less than 10 %.

In a preferred embodiment of said method, said external voltage $U_o$ is a constant DC voltage.

In a preferred embodiment of the method, said external voltage $U_o$ is a time-dependent pattern, having a period $T_o$, wherein the period T of said periodic AC functions $U_{P,j}(t)$ is preferably an integer multiple of $T_o$, such that $T_o = T/m$, with m being an integer, wherein preferably m = N. In a preferred embodiment of the method, said external voltage $U_o$ is a square wave, alternating between discrete values, and in particular alternating between a predetermined value $U_{o,max}$ and zero, or alternating between $U_{o,max}$, zero, and $-U_{o,max}$.

In a preferred embodiment of the method, said time-dependent pattern for the external voltage $U_o$ is such that in a given operation state, defined by

- a set of AC functions $U_{P,j}(t)$ to be applied to said electrical consumer, and
- the amplitudes of phase currents to be applied to said electrical consumer,

the total loss is smaller than in an operation with the same periodic AC functions $U_{P,j}(t)$ and the same phase currents, but with an external DC voltage $U_o$ constantly kept at a constant value corresponding to 50% of the amplitude of $U_{P,j}(t)$ and with a time-dependent offset $U_{off}(t)$ optimized for reducing said total loss, and in particular smaller by at least 5%, preferably by at least 10%, and most preferably by at least 15%.

In a preferred embodiment, said method is carried out using a control system comprising or connected with a memory storing different time-dependent patterns for the external voltage $U_o$ to be selected, in operation, depending on one or both of

- the amplitudes of periodic AC functions $U_{P,j}(t)$ to be applied to said electrical consumer, and

- the amplitudes of phase currents to be applied to said electrical consumer, or another quantity related thereto.

In a preferred embodiment of the method, $U_{P,j}(t) = A \cdot \sin(\omega t + (j-1) \cdot 2\pi/N)$, with A being a voltage amplitude and $\omega$ an angular frequency.

Preferably, the method further comprises operating said plurality of module switches for connecting energy storage elements of adjacent modules in anti-series, wherein the anti-series connection of an energy storage element corresponds to a series connection with reversed polarity.

In a preferred embodiment, for each of said MESDCS, an additional switching arrangement is provided allowing for selectively reversing the connection of its first and second ends, respectively.

In a preferred embodiment, the method further comprises a step of operating said plurality of module switches for connecting the energy storage elements of two non-adjacent modules, which are separated by one or more modules with deactivated or bypassed energy storage element, in parallel.

In a preferred embodiment, said method is carried out using a system as defined in one of the embodiments described above.

In a preferred embodiment of the method, said consumer is an electric motor of an electric vehicle, said electric motor having N terminals, wherein each of said common phase terminals is connected with a corresponding one of said terminals of said electric motor.

In a related embodiment, said first and second common external terminals are preferably connected for providing electrical power to one or more electrical consumers of said vehicle.

SHORT DESCRIPTION OF THE FIGURES

Fig. 1       illustrates a battery-powered system including a block battery and an additional converter

Fig. 2       shows a four-quadrant-module for use in an MESDCS having eight switches.

Fig. 3       shows a four-quadrant-module for use in an MESDCS having nine switches.

| | |
|---|---|
| Fig. 4 | shows on the left a two-quadrant-module for use in an MESDCS having three module switches, and on the right a further two-quadrant-module for use in an MESDCS having four module switches. |
| Fig. 5 | shows four cascaded two-quadrant modules having three switches (top) and four switches (bottom), respectively. |
| Fig. 6 | shows a system for storing energy and providing three AC phase voltages to an electrical consumer according to prior art. |
| Fig. 7 | shows a system for storing energy and providing three AC phase voltages to an electrical consumer according to the invention. |
| Fig. 8a-d | show periodic AC functions $U_{P,j}(t)$ (part a), a common, time-dependent offset $U_{off}(t)$ (part b), phase voltages $U_j = U_{P,j}(t) + U_{off}(t)$ (part c), and $U_o - U_j$ (part d) for $U_o$ = 400 V (DC). |
| Fig. 9a-d | show periodic AC functions $U_{P,j}(t)$ (part a), a common, time-dependent offset $U_{off}(t)$ (part b), phase voltages $U_j = U_{P,j}(t) + U_{off}(t)$ (part c), and $U_o - U_j$ (part d) for $U_o$ = 200 V (DC). |
| Fig. 10a-d | show periodic AC functions $U_{P,j}(t)$ (part a), a common, time-dependent offset $U_{off}(t)$ (part b), phase voltages $U_j = U_{P,j}(t) + U_{off}(t)$ (part c), and $U_o - U_j$ (part d) for $U_o$ = 1800 V (DC). |
| Fig. ma-d | show periodic AC functions $U_{P,j}(t)$ (part a), a common, time-dependent offset $U_{off}(t)$ (part b), phase voltages $U_j = U_{P,j}(t) + U_{off}(t)$ (part c), and $U_o - U_j$ (part d) for $U_o$ = 110 V (DC). |
| Fig. 12a-d | show periodic AC functions $U_{P,j}(t)$ (part a), a common, time-dependent offset $U_{off}(t)$ (part b), phase voltages $U_j = U_{P,j}(t) + U_{off}(t)$ (part c), and $U_o - U_j$ (part d) for $U_o$ = o V (DC). |
| Fig. 13a | shows an equivalent circuit of a consumer load. |
| Fig. 13b | shows $U_{off}(t)$ when voltage and current are in phase (cos ($\varphi$) = 1). |
| Fig. 13c | shows $U_{off}(t)$ when voltage and current are not in phase (cos ($\varphi$) = 0.9) |
| Fig. 14a-g | show a time of dependent pattern of $U_o$ (part a), periodic AC functions $U_{P,j}(t)$ (part b), a common, time-dependent offset $U_{off}(t)$ (part c), phase voltages $U_j = U_{P,j}(t) + U_{off}(t)$ (part d), $U_o - U_j$ (part e), a diagram showing the relative timing of a monopolar, time-varying $U_o$ and the periodic AC functions $U_{P,j}(t)$ (part f), and a diagram showing the relative timing of a bipolar, time varying $U_o$ and the periodic AC functions $U_{P,j}(t)$ (part g). |
| Fig. 15 | shows a system similar to that of Fig. 7, but with a load in a triangular configuration. |
| Fig. 16 | shows a system similar to that of Fig. 7, but with a rectifying circuit for generating a DC external voltage from an AC external voltage $U_o$. |
| Fig. 17 | shows a system similar to that of Fig. 7, but with a circuit for generating a doubled DC external voltage from an AC external voltage $U_o$. |
| Fig. 18 | shows a system similar to that of Fig. 7, where however two-quadrant-modules are used rather than four-quadrant-modules and where MESDCS is provided with an additional switching arrangement that allows for reversing the polarity of the entire MESDCS. |

## DESCRIPTION OF THE PREFERRED EMBODIMENTS

It is to be understood that both the foregoing general description and the following description are exemplary and explanatory only and are not restrictive of the methods and devices described herein. In this application, the use of the singular may include the plural unless specifically stated otherwise. Also, the use of "or" means "and/or" where applicable or unless stated otherwise. Those of ordinary skill in the art will realize that the following description is illustrative only and is not intended to be in any way limiting. Other embodiments will readily suggest themselves to such skilled persons having the benefit of this disclosure. Reference will now be made in detail to various implementations of the example embodiments as illustrated in the accompanying drawings. The same reference signs will be used to the extent possible throughout the drawings and the following description to refer to the same or like items.

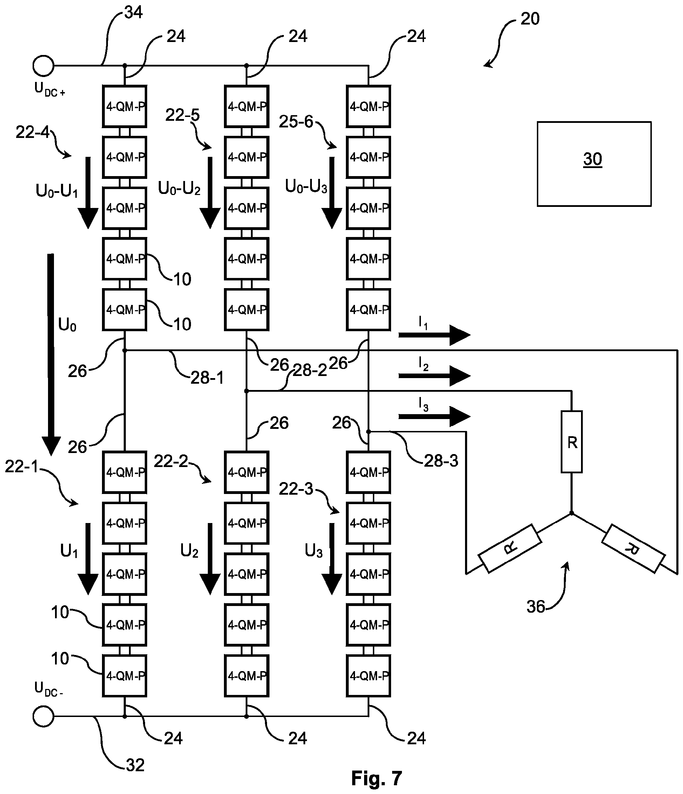

In Fig. 7, a system 20 for storing energy and providing 3 AC phase voltages $U_j$, with $j = 1, ... 3$, and corresponding phase currents to an electrical consumer 36 that is connected to said system 20. In the embodiment of Fig. 7, the consumer 36 may be an electric motor of an electric vehicle, which in the simplified illustration of Fig. 7 is represented by three resistors "R" connected in star configuration.

As is seen in Fig. 7, the system 20 comprises 3 pairs, i.e. a total of six modular energy storage direct converter systems (MESDCS) 22 and a control system 30. More precisely, a first pair of MESDCS 22 comprises MESDCS 22-1 and 22-4, a second pair of MESDCS 22 comprises MESDCS 22-2 and 22-5, and a third pair of MESDCS 22 comprises MESDCS 22-3 and 22-6.

Each of the six MESDCS 22 comprises a converter arm having a first end 24 and a second end 26 and comprising a plurality of sequentially interconnected modules 10. In the embodiment illustrated in Fig. 7, each MESDCS 22 is shown to have only five modules 10, but in practice, the number of modules 10 in each MESDCS would typically much larger. In Fig. 7, the modules are again denoted by "4-QM-P", to indicate that the modules are four-quadrant modules, that further allow for parallel connection. The modules 10 used in the system 20 of Fig. 7 may for example be of the type shown in Fig. 2 or 3.

While not shown in detail in Fig. 7, each module 10 comprises two first terminals (such as the terminals shown under reference sign 12 in Fig. 2 or 3) and two second terminals (such as the terminals shown under reference sign 14 in Fig. 2 or 3). In each two adjacent modules 10, each of the two first terminals of one module are connected to a corresponding one of the two second terminals of the other module 10.

In the representation of Fig. 7, the first and last modules 10 of each MESDCS 22 are shown to have only one terminal forming the respective end 24 or 26 of the MESDCS 22. In some embodiments, the first and last modules 10 would still be of the same structure as all of the modules 10 in between, including two first and two second terminals, but with the two outermost terminals being connected with each other. When stating that the "each of the modules 10" comprised by the MESDCS has "at least two first and at least two second terminals", this is understood to include the case where the outer terminals of the outermost module are connected with each other. In the alternative, if the outermost modules in an MESDCS should be of different construction having only one terminal at its outermost side, these outermost modules would then not be part of the "plurality of sequentially interconnected modules" referred to above, but additional modules.

While not shown in Fig. 7 in detail, each module 10 further comprises a storage element for electrical energy, of the type shown e.g. in Fig. 2 or 3 under reference sign 16, wherein in the specific embodiment described with reference to Fig. 7 and the following figures, the storage element 16 is a battery. Note that the "module battery" 16 as referred to herein may refer to an individual battery cell, or to a plurality of battery cells connected with each other, to thereby increase the module voltage as compared to the single battery cell voltage.

Each of the modules 10 comprises a plurality of module switches (not shown), such as the module switches shown under reference sign 18 in Fig. 2 to Fig. 4. Further shown in Fig. 7 is a control system 30, which allows for controlling the switching states of the module switches, to thereby control the operating state of each MESDCS 22. Accordingly, when referring to a step of "controlling the MESDCS", this typically involves controlling the switching states of the individual module switches 18 included in the modules 10. The control system 30 can be provided by hardware, by software or a combination of both. For example, the control system 30 may comprise one or more microprocessors carrying out the control of the MESDCS 22, and in particular the control of the operation of the module switches 18 comprised in the modules 10, under control of a corresponding software code. Additionally or alternatively, the control system 30 may comprise one or more ASICs or FPGAs. The control system 30 may comprise a single control unit, or a plurality of control units which are in data or signal communication with each other. Signal links are provided to connect the control system 30 with the MESDCS 22 and their respective modules 10, which are, however, not shown in the figures for clarity. The signal links could be formed by wired or wireless connections.

While different switching topologies of the module 10 are possible, and invention is not limited to any specific one of them, the present invention does require that under control of said control unit 30, said plurality of module switches 18 allow for

- connecting energy storage elements 16 of adjacent modules 10 in series,
- selectively deactivating or bypassing the energy storage element 16 of each module 16, and
- connecting energy storage elements 16 of adjacent modules 10 in parallel.

These requirements are met by any of the modules 10 shown in Fig. 2 to 4. In addition, the invention requires that the polarity of a series connection of energy storage elements can be reversed. In Fig. 7, where four-quadrant-modules are used, this can be achieved by controlling the polarity of each individual module 10. That is to say, such four-quadrant-modules allow for connecting energy storage elements 16 of adjacent modules 10 not only in series, but also in in "anti-series", wherein the "anti-series connection" of an energy storage element 16 corresponds to a series connection with reversed polarity. This "anti-series connection" is enabled for the modules shown in Fig. 2 and Fig. 3, but not for the (two-quadrant-) modules of Fig. 4. However, as will be shown below, in alternative embodiments, MESDCS 22 can be employed which comprise two-quadrant-modules, but in addition an additional switching arrangement allowing for reversing the polarity of a series connection of the energy storage elements comprised by said to-quadrant-modules.

While not shown in Fig. 7 and the further figures, each of the MESDCS 22 in practice may have one or more inductances for smoothing the voltage and facilitating the control of the MESDCS 22 as a whole. Such inductances are not shown in the figures for simplicity.

As is further seen in Fig. 7, each pair of MESDCS 22 comprises a first MESDCS 22-1, 22-2, 22-3 and a second MESDCS 22-4, 22-5, 22-6, respectively. More particularly,

- the first ends of the first MESDCS 22-1, 22-2, 22-3 of each of said 3 pairs of MESDCS 22 is connected to a first common external terminal 32,
- the first ends 24 of the second MESDCS 22-4, 22-5, 22-6 of each of said 3 pairs of MESDCS 22 is connected to a second common external terminal 34, and
- the second ends 26 of the j-th pair of MESDCS 22 are connected to a common j-th phase terminal 28-j, with j = 1, ...,3.

The control system (30) controls the three pairs of MESDCS 22 such that

- a predetermined external voltage or voltage pattern $U_o$ is provided between said first and second common external terminals 32, 34, and
- such that at each of said 3 common phase terminals 28-1, 28-2, and 28-3, a corresponding AC phase voltage $U_1$, $U_2$, and $U_3$ relative to said first common external terminal 32 is applied.

It is hence seen that the AC phase voltage U; is the voltage across (i.e. between the first and second ends 24, 26) of the first MESDCS 22-j of each of the three pairs. The voltage across the second MESDCS 22-(j+3) is such as to add up with $U_j$ to give $U_o$. As mentioned before, "controlling a MESDCS" comprises operating the switches 18 of the modules 10 included therein such that by suitable combinations of series connection, parallel connection, bypassing, and (in case of two-quadrant modules) anti-series connection of the energy storage elements 16, the desired voltage is established between the first and second ends 24, 26 thereof. The MESDCS-voltages that can be obtained by employing by these switching states will be discretized, due to the discrete voltages of the individual batteries. However, intermediate voltages can for example obtained by combining the switching control with PWM in one or more of the modules.

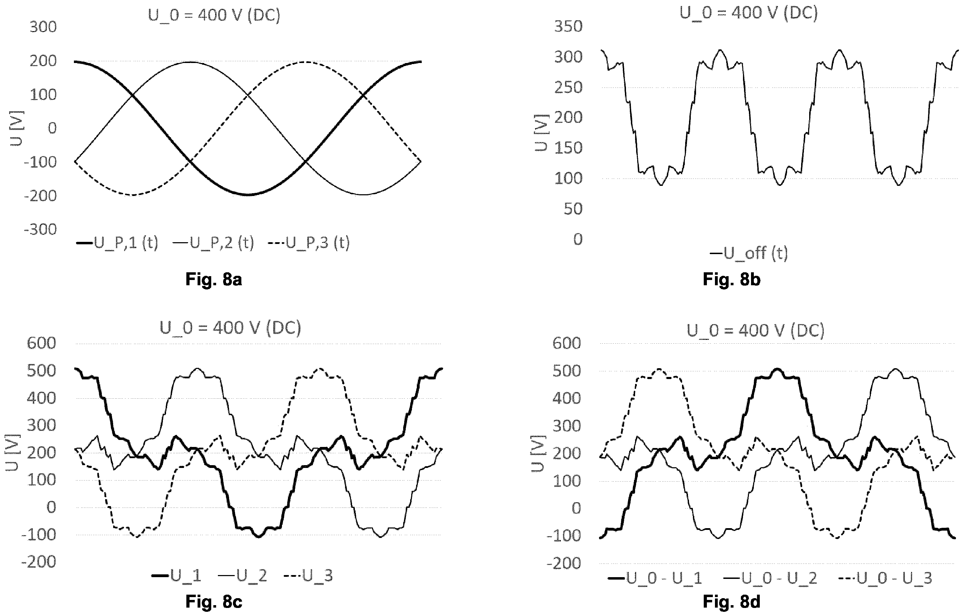

In the embodiment of the invention, the aforementioned "total loss" can be reduced by choosing a suitable value or pattern for the external voltage $U_o$, and by applying an additional common shift $U_{off}(t)$ to each of the phase voltages. Fig. 8 shows a case where the external voltage $U_o$ is a constant DC voltage of 400 V. In this example, an operational state is regarded in which the consumer 36, i.e. the electric motor, has a power of 83 kW, receives a peak voltage of 197 V and in which the load resistance is purely ohmic, meaning that a phase angle $\varphi$ between the current and the voltage is zero (cos $(\varphi) = 1$). In this operation state, the electric motor "expects" to receive three sinusoidal phase voltages with a phase shift of 120°, as shown in Fig. 8a. These sinusoidal voltages are an example of to the periodic AC function $U_{P,j}(t)$ referred to above. However, to each of these sinusoidal voltages $U_{P,j}(t)$, a common, time-dependent offset $U_{off}(t)$ is added, which is shown in Fig. 8b, to thereby generate the phase voltages $U_1$, $U_2$, and $U_3$, shown in Fig. 8c. The phase voltages U; can hence be decomposed into a periodic AC function $U_{P,j}(t)$ as shown in Fig. 8a and the common, time-dependent offset $U_{off}(t)$ that is common to each of said phase voltages $U_j$, such that $U_j = U_{P,j}(t) + U_{off}(t)$, wherein both voltages $U_{P,j}(t)$ and $U_{off}(t)$ are relative to said first common external terminal $_{32}$.

The periodic AC functions $U_{P,j}(t)$ of Fig. 8a are phase-shifted copies of each other such that for each integers i, j chosen from [1,...,3] with $i \neq j$, and k being 1 or 2, the following relation holds:

$$U_{P,i}(t) = U_{P,j}(t + (i - j) \cdot T/N).$$

Since the time-dependent offset $U_{off}(t)$ is the same for each of the phase voltages $U_1$, $U_2$, and $U_3$, it does not affect the operation of the electric motor 36, but only leads to a shift of its star point potential. However, the pattern of said common, time-dependent offset $U_{off}(t)$ is chosen such that in operation, a total loss, defined as the sum of the energy storage element losses of all modules comprised in any of the N pairs of MESDCS 22 during a full cycle of duration T of said periodic AC functions $U_{P,j}(t)$, is smaller than in an operation with the same periodic AC functions $U_{P,j}(t)$, the same phase currents, and the same external voltage or voltage pattern $U_o$, but without such common, time-dependent offset $U_{off}(t)$. In the embodiment shown, $U_{off}(t)$ has been chosen such as to minimize the total battery loss, for the situation shown, i.e. with the choice of $U_o$ being a constant DC voltage at 400 V and with the operating state at hand (motor power 83 kW, peak voltage of 197 V,cos $(\varphi) = 1$, and a voltage of each individual module of 40 V, wherein each MESDCS 22 includes 14 modules). Herein, as mentioned above, the "total loss" is understood as the sum of the battery losses of all modules comprised in any of the 3 pairs of MESDCS 22 during a full cycle of duration T of said periodic AC functions $U_{P,j}(t)$. The optimum pattern or waveform of the time-dependent offset $U_{off}(t)$ for minimizing the total loss, as shown in Fig. 8b has been determined in a numerical optimization scheme.

The total loss in this case was found to be 8.305 kW. For the same operation state, but without time-dependent offset (i.e. $U_{off}(t) = 0$), the total loss would have been 12.190 kW. Accordingly, it is seen that the total losses can indeed be significantly reduced using a suitable chosen time-dependent offset $U_{off}(t)$. The external voltage $U_o = 400$ V (DC) can then be used to provide power to further consumers in the electric vehicle.

Note that the suitable pattern of the common, time-dependent offset $U_{off}(t)$ has to be adapted to the present operation state. For this purpose, in embodiments of the present invention, the control system 30 is configured for providing, in operation, different patterns of said common, time-dependent offset $U_{off}(t)$, said patterns depending on the operation state of said system 20.

In particular, the operation state is, at least in part, characterized by one or more of

- the amplitudes of periodic AC functions $U_{P,j}(t)$ to be applied to the electric motor (36) connected with the system 20,
- the amplitudes of phase currents to be applied the electric motor 36, or another quantity related thereto,
- the external voltage or voltage pattern $U_o$ provided between said first and second common external terminals,
- a phase angle $\varphi$ between the current and the voltage of each phase, and
- a voltage of the storage element for electrical energy.

In the embodiment shown, suitable pattern of the common, time-dependent offset $U_{off}(t)$ are pre-calculated for a set of operation states and stored in a memory that is included in or connected to the control system 30, from which in operation a selection is made.

It is further seen that the "total loss" can be further reduced when choosing the predetermined external voltage or voltage pattern suitably.

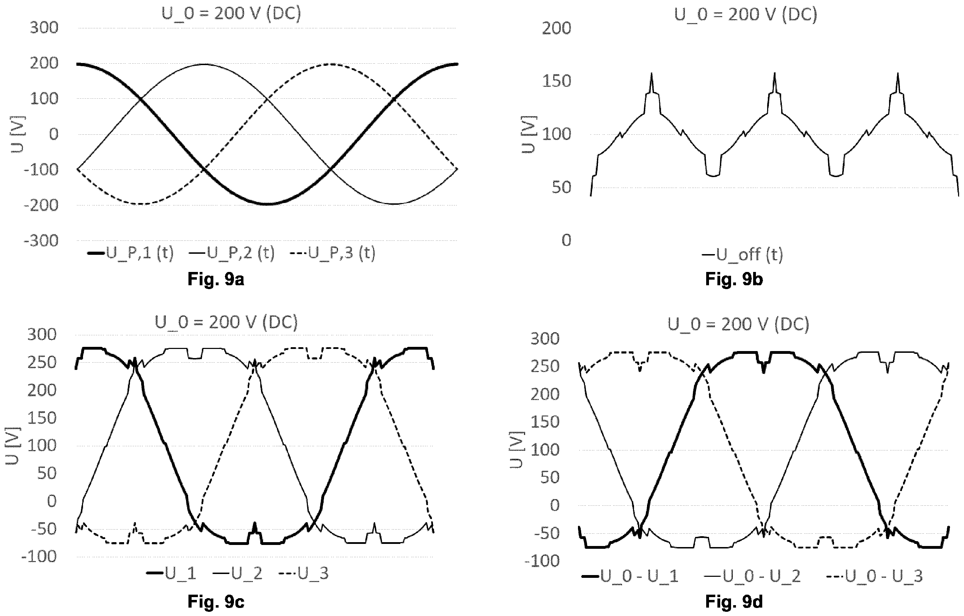

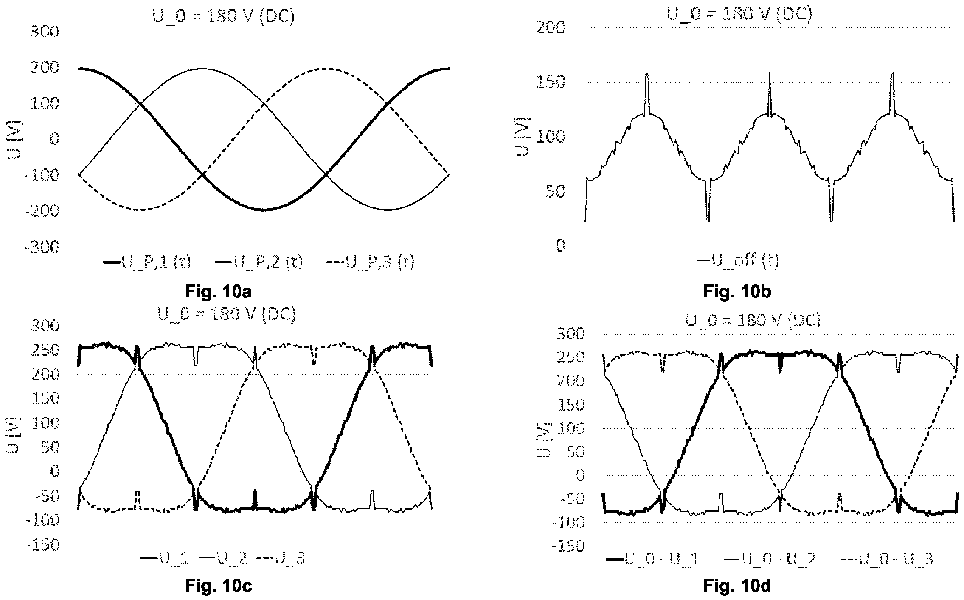

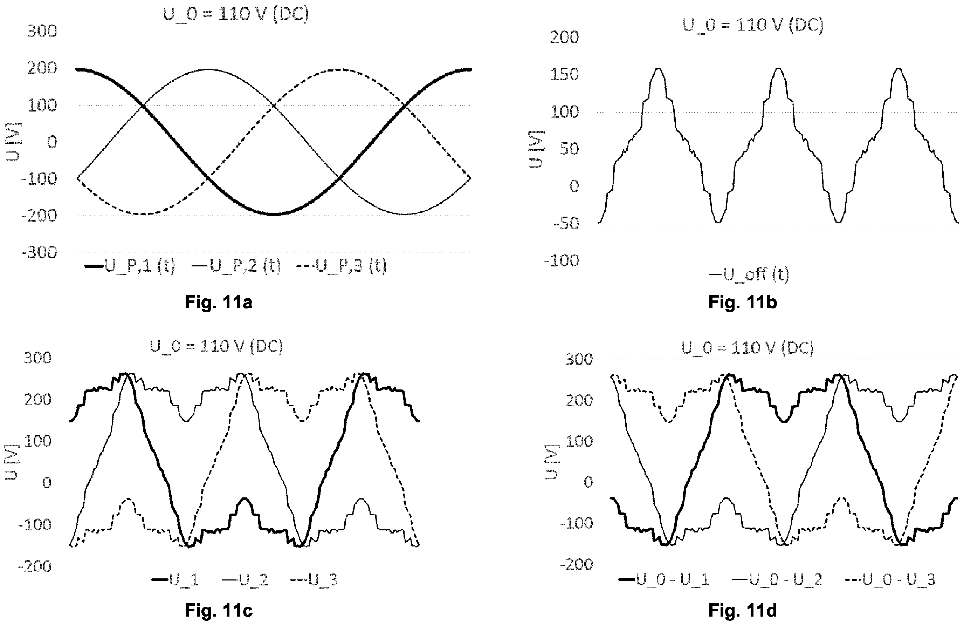

Fig. 9a-d, Fig. 10 a-d, and Fig. 11a-d show the same voltages as Fig. 8 a-d, but for $U_o$ being DC voltages of 200 V, 180 V, and 110 V, respectively, but for the same operating state (motor power 83 kW, peak voltage of 197V, cos $(\varphi) = 1$), and a voltage of each individual module of 40 V, with 14 modules in each each MESDCS 22). In each of the cases, again $U_{off}(t)$ has been optimized such as to reduce the total loss, which was found to be 5.300 kW, 5.147 kW and 5.073 kW, respectively.

For the same operating state and the same set of batteries, the "theoretical minimum loss" would be 3.970 kW. Herein, the "theoretical minimum total loss" corresponds to the total loss that would be obtained if each of the batteries were subjected to a constant average current, wherein the constant average current corresponds to mean of the time-averaged currents associated with each of the batteries 16 in all modules 10 comprised in any of the six MESDCS (22) of the system 20, during a full cycle of duration T during the actual operation.

Accordingly, if $U_o$ are selected at 200 V, 180 V, and 110 V, and with suitably chosen $U_{off}(t)$, the total loss is at 134%, 130%, and 128% of the theoretical minimum loss. It is therefore seen that the losses can be reduced by choosing the most appropriate value for $U_o$. In the present operation state, the smallest total losses were obtained at $U_o = 117$ V.

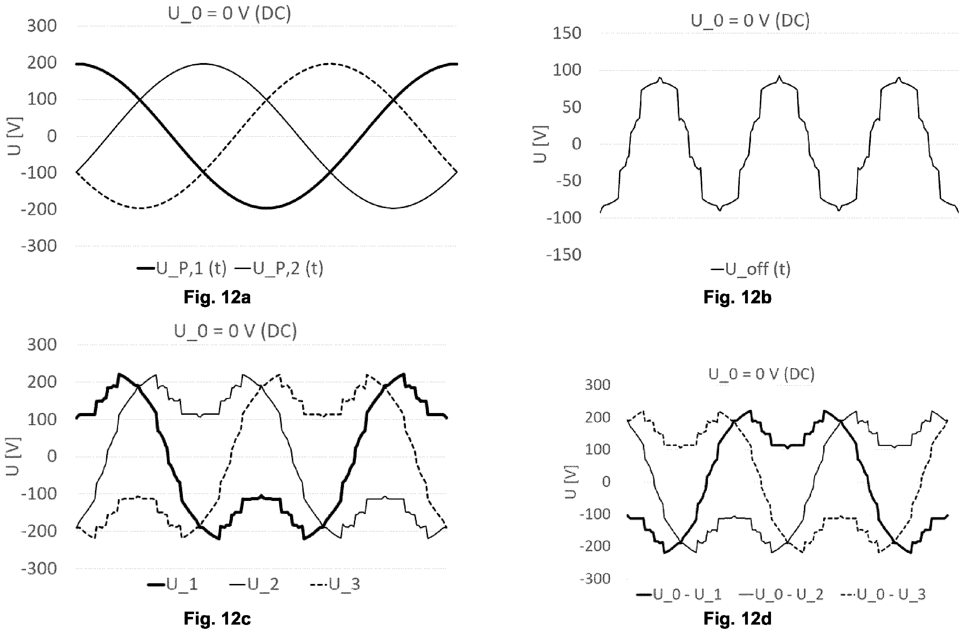

If $U_o$ is chosen smaller than this, the total losses start to increase again. Fig. 12a-d show the same voltages as Fig. 8-11, but for $U_o = o$. In this case, the total loss is 5.324 kW, and hence worse than for the cases of $U_o = 200$ V, 180 V, and 110 V.

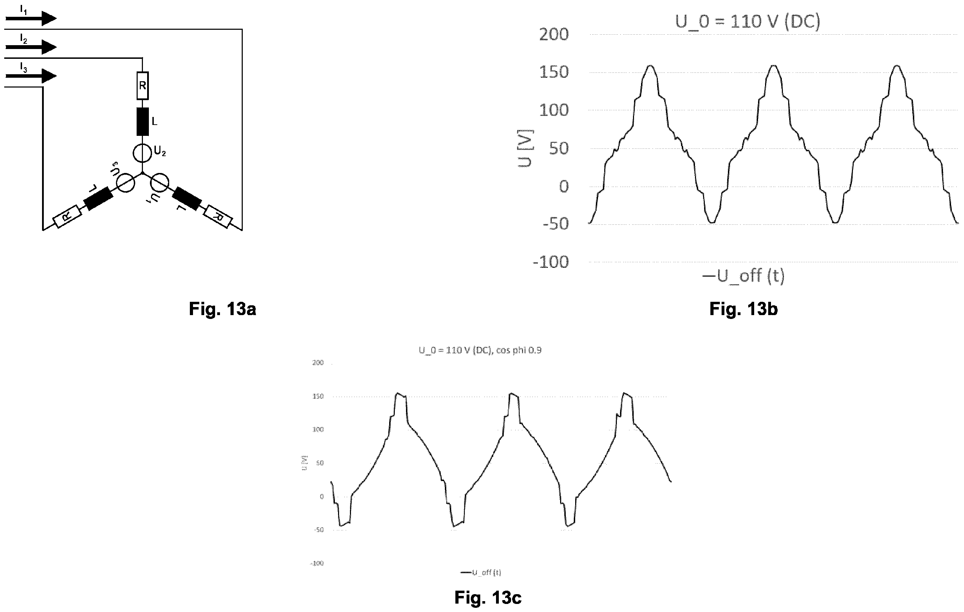

In the examples above, it was always assumed that the phase voltages and phase currents were in phase, i.e. $\cos(\varphi) = 1$. This can only be expected if the consumer forms a purely ohmic load, which is an idealized assumption. Figure 13 a shows a more realistic representation of the load, where the load includes ohmic resistance R, an inductance L, as well as a voltage source. Nevertheless, even for the more realistic source, the suitable pattern of the common, time-dependent offset $U_{off}(t)$ can be determined and the same type of reductions in the total loss can be achieved.

As an example, Fig. 13b again shows $U_{off}(t)$ for the case $U_o = 110$ V (DC) with $\cos(\varphi) = 1$, i. e. the same pattern as shown in Fig. 11b. Figure 13c shows the optimized $U_{off}(t)$ for the same operation state, except that in this case $\cos(\varphi) = 0.9$. It is seen that this phase shift leads to a modified $U_{off}(t)$ that gives the lowest total loss, different from that of Fig. 13b, but again the total loss can be reduced in the similar manner.

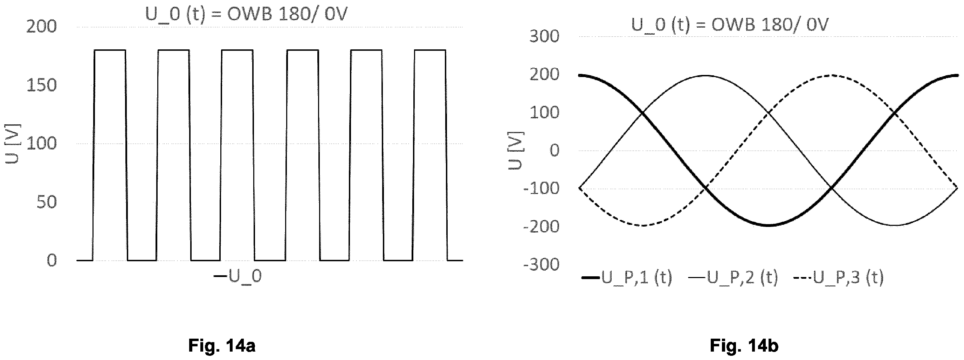

Even better reductions in the total loss can be obtained if instead of a DC voltage, the external voltage $U_o$ is a time-dependent voltage pattern as well. An example for this is shown in Fig. 14a, where $U_o$ is a square wave alternating between oV and 180V. In this case, the period of $U_o(t)$ is 1/6 of the period T of the periodic AC function $U_{P,j}(t)$ (Fig. 14b).

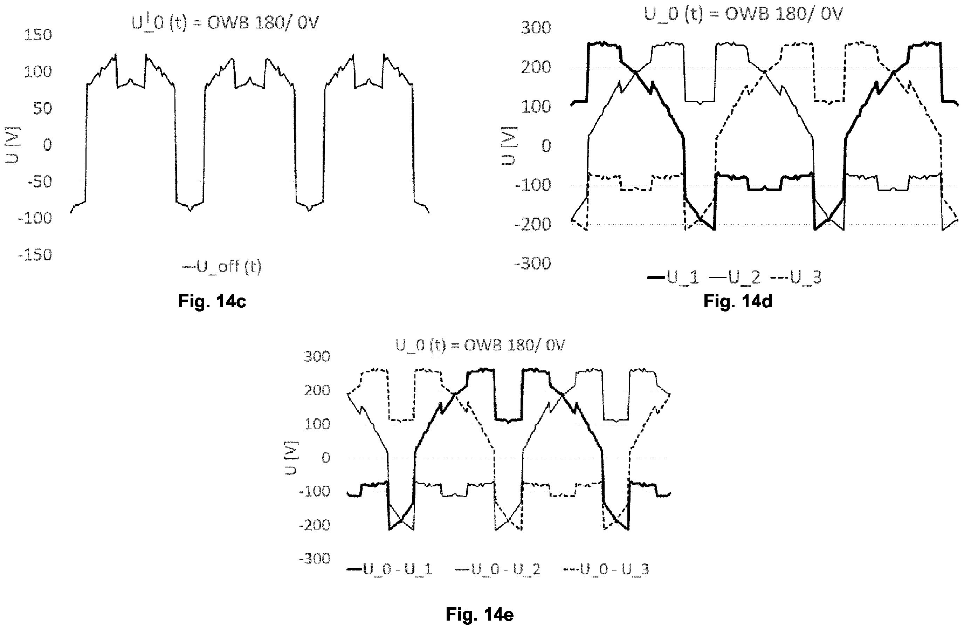

Figure 14c shows $U_{off}(t)$ as obtained in the optimization of the total loss for the same operation state as before, but in view of the time varying external voltage $U_o$ as shown in Fig. 14a. Fig. 14d shows again the phase voltages $U_1$, $U_2$, $U_3$, which correspond to the sum of the voltages of Fig. 14b and 14c. Fig. 14e shows the voltages across the second MESDCS 22-4, 22-5, and 22-6 of each of the three pairs, which correspond to $U_o$-$U_1$, $U_o$-$U_2$, and $U_o$-$U_3$, respectively. In this case, the total loss can be reduced to 4.538 kW, which is only 114% of the "theoretically minimal total loss". This is a truly remarkable result, noting that this "theoretically minimal total loss" can of course not be obtained in practice, and in particular not with a set-up shown in Fig. 1, for the reasons given above. Moreover, when using the conventional battery 52 and the additional converter 56 as shown in Fig. 1, the losses in the switches and the losses in the engine will be higher than in embodiments of the invention, so that the overall efficiency of the system of the invention is believed to be better than in any known prior art battery system for powering electric motors, including the one of Fig. 1.

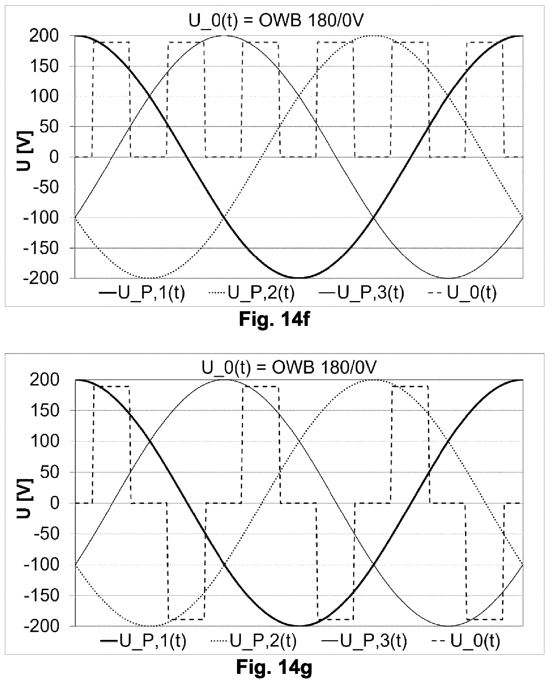

Note that the same low battery losses can be obtained if every second peak in the external voltage $U_o$ shown in Fig. 14a was shifted to -180V, such as to yield a voltage pattern of oV, 180V, oV, -180V, oV, 180V and so on. For the operation of the motor 36 and the efficiency, this would not make a difference. However, this would lead to a larger amplitude of the external voltage $U_o$, which may be advantageous for powering further electrical consumers in the vehicle. In this case, the period of $U_o(t)$ is 1/3 of the period T of the periodic AC function $U_{P,j}(t)$. Fig. 14f and Fig. 14g show the relative timings of a monopolar, time-varying $U_o$ and the periodic AC functions $U_{P,j}(t)$ (Fig. 14f), and a diagram showing the relative timing of a bipolar, time varying $U_o$ and the periodic AC functions $U_{P,j}(t)$ (Fig. 14 g).

The inventors could confirm that constructing more complicated waveforms or patterns for $U_o(t)$, going beyond step functions, the battery losses can even be further reduced.

In the description so far, each of the pairs of MESDCS 22-1/22-4, 22-2/22-5, and 22-3/22-6 has been controlled such that the total voltage across the each pair, at any point in time, corresponds to Uo. However, it is not necessary to control each individual pair of MESDCS 22-1/22-4, 22-2/22-5, and 22-3/22-6 such that they each give exactly Uo. Instead, it is possible to control the voltages such as to slightly deviate from $U_o$ and from each other, to thereby induce circular currents running through selected pairs of MESDCS. For example, if the voltage across the second pair of MESDCS 22-2/22-5 is exactly $U_o$, but the voltage across the first pair of MESDCS 22-1/22-4 is $U_o + \delta$ and the voltage across the third pair of MESDCS 22-3/22-6 is Uo-$\delta$, there will be a circular current flowing through MESDCS 22-1, 22-4, 22-6, and 22-3 in this order, i.e. in clockwise direction in the representation of figure 7. These circular currents can be controlled with only negligible influence on the load 36. By suitably controlling these circular currents, the total loss can be further reduced.

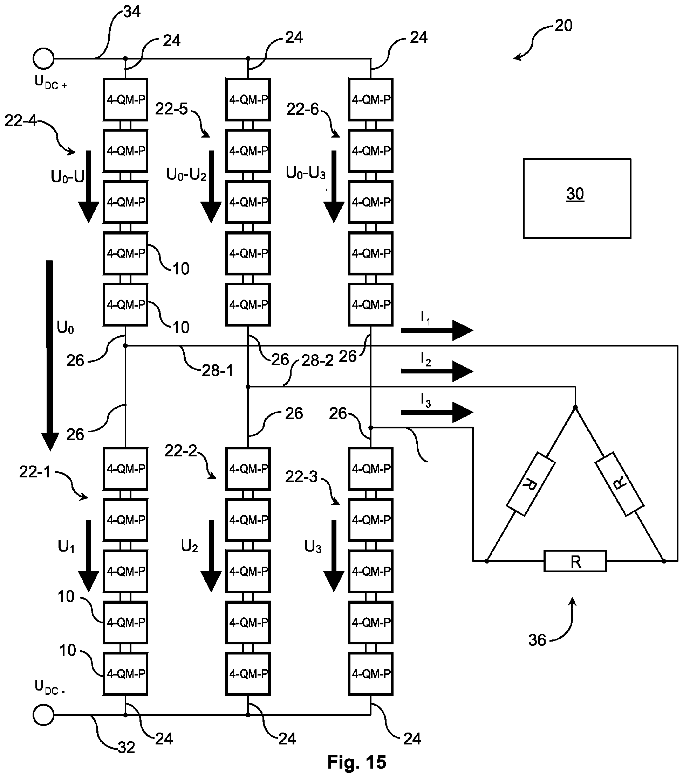

With reference to Fig. 15 to 18, further variants of the embodiment of Fig. 7 are briefly discussed. Fig. 15 shows a system 20 which is identical to the one of Fig. 7, but in which the load 36 has a triangular configuration rather than a star configuration.

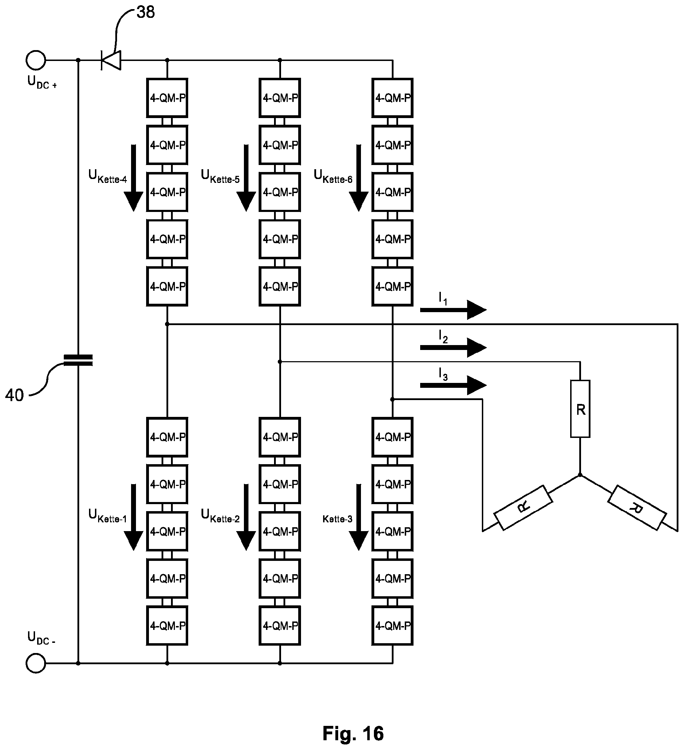

Fig. 16 shows the same configuration as Fig. 7, except that a diode 38 and a capacitor 40 are provided, which allow for effectively converting the external voltage $U_o$ as shown in Fig. 14a alternating between o V and 180 V into a 180 V DC voltage, which may be more suitable for supplying energy to a further consumer, such as an air conditioning system in an electric vehicle. This is an example of the more general idea to choose external voltage of voltage pattern predominantly with an eye on reducing the total battery loss in the system 20, and to convert it in a manner suitable for the purposes of an additional consumer.

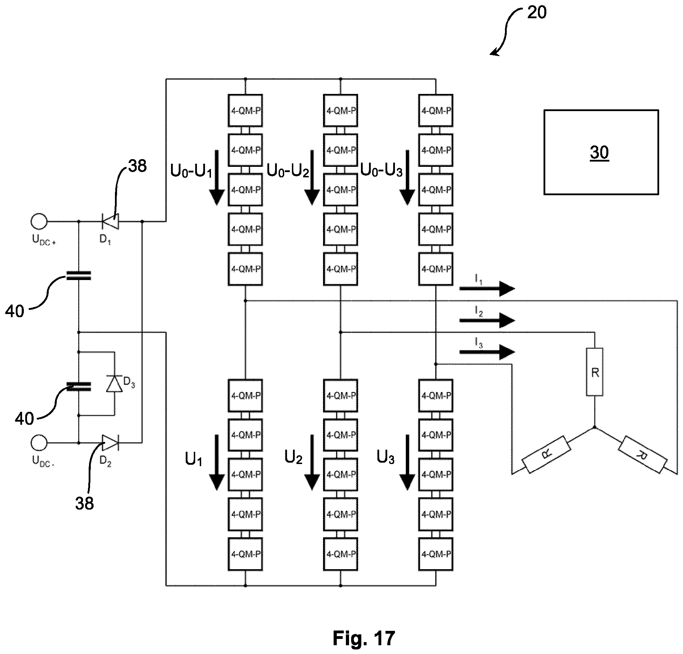

A further related example is shown in Fig. 17, where first and second diodes 38 ($D_1$ and $D_2$ in Fig. 17) and two capacitors 40 are connected such as to form a voltage doubling circuit. This configuration is for example suitable for the pattern of the external voltage $U_o$ described above, involving positive and negatives voltages, such as oV, +180 V, o V, -180 V, o V, +180 V ..., which allows for providing a constant DC voltage of 360 V, while at the same time allowing for very low battery losses, much lower than in the case of Fig. 8, where an external voltage of 400 V was directly obtained, but at the price of much higher battery losses, even when optimizing the common, time-dependent of said $U_{off}(t)$.

The third diode D3 allows for operation with both, monopolar external voltages (e.g. square wave $U_{o,max}$, zero, $U_{o,max}$, zero ...") as well as bipolar external voltages (e.g. square wave $U_{o,max}$, zero, -$U_{o,max}$, zero ..."). For example, if the amplitude of the periodic AC function $U_{P,j}(t)$ is large, which is for example the case if an electric vehicle runs at high speed, the system 20 may be controlled to provide for a monopolar square wave voltage with an amplitude $U_{o,max}$ that allows for optimum or at least close to optimum battery losses. However, if the amplitude of the periodic AC function $U_{P,j}(t)$ is e.g. reduced to 50%, for example at lesser speed of the electric vehicle, then the amplitude of the monopolar square wave voltage would likewise have to be reduced by 50% (i.e. $U_{o,max}$/2) in order to maintain the low battery losses, which however may not be desired for a consumer powered by the external voltage. In this case, the system may be controlled to output a bipolar square wave voltage: $U_{o,max}$/2, zero, -$U_{o,max}$/2, zero ..., and the voltage doubling circuit is automatically activated, such that still a DC voltage of $U_{o,max}$ can be provided to a consumer powered by the external voltage.

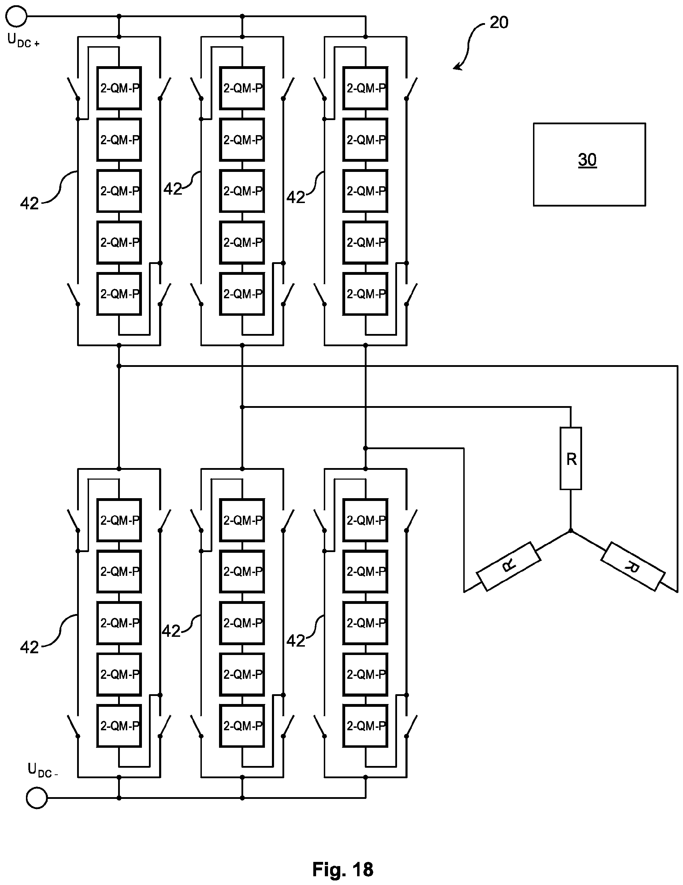

Finally, Fig. 18 shows a configuration similar to that of Fig. 7, where however two-quadrant-modules (such as those of Fig. 4) are used rather than four-quadrant-modules. As was explained above, in the framework of the invention is necessary that the polarity of a series connection of batteries 16 can be reversed. While the two-quadrant-models do not allow for an individual anti-series connection, in the embodiment of Fig. 18, each MESDCS is provided with an additional switching arrangement that allows for reversing the polarity of the entire MESDCS, by essentially reversing the connection of its first and second ends with the remainder of the circuit.

While the present invention has been described in terms of specific embodiments, it is understood that variations and modifications will occur to those in the art, all of which are intended as aspects of the present invention. Accordingly, only such limitations as appear in the claims should be placed on the invention.

LIST OF REFERENCE SIGNS

| | |
|---|---|
| 10 | module |
| 12 | first terminal |
| 14 | second terminal |
| 16 | energy storage device |
| 18 | switch |
| 20 | system for providing N bipolar AC phase voltages |
| 22 | MESDCS |
| | 22-1 first MESDCS of first pair |
| | 22-2 first MESDCS of second pair |
| | 22-3 first MESDCS of third pair |
| | 22-4 second MESDCS of first pair |
| | 22-5 second MESDCS of second pair |
| | 22-6 second MESDCS of third pair |
| 24 | first end of MESDCS |
| 26 | second end of MESDCS |
| 27 | star point |
| 28-1 | first phase terminal |
| 28-2 | second phase terminal |
| 28-3 | third phase terminal |
| | |
| 30 | control system |
| 32 | first common external terminal |
| 34 | second common external terminal |
| 36 | electrical consumer (electric motor) |
| 38 | diode |
| 40 | capacitor |
| 42 | switching arrangement for reversing polarity of MESDCS |
| 50 | battery-powered system |
| 52 | block battery |
| 54 | individual battery |
| 56 | converter (B6-bridge) |
| 58 | electrical consumer (electric motor) |

**Claims**

1. A system (20) for storing energy and providing N AC phase voltages $U_j$, with j =1, ... N, and corresponding phase currents to an electrical consumer (36) connected or connectable to said system (20), wherein N is an integer number with N $\geq$ 2, said system (20) comprising:

    N pairs of modular energy storage direct converter systems (MESDCS) (22) and a control system (30),
    wherein each MESDCS (22) comprises a converter arm having a first end (24) and a second end (26) and comprising a plurality of sequentially interconnected modules (10),
    wherein each module (10) comprises at least two first terminals (12) and at least two second terminals (14), a storage element (16) for electrical energy, in particular a battery or a supercapacitor, and a plurality of module switches (18),
    wherein in operation, an energy storage element loss is associated with each energy storage element (16), wherein said energy storage element loss is at least in part dependent on the current associated with the respective energy storage element (16),
    wherein in each two adjacent modules (10) each of the at least two first terminals (12) of one module (10) is connected either directly or via an intermediate component to a corresponding one of the at least two second terminals (18) of the other module (10),
    wherein under control of said control system (30), said plurality of module switches (18) allow for

        - connecting energy storage elements (16) of adjacent modules (10) in series,

- selectively deactivating or bypassing the energy storage element (16) of each module (16), and
- connecting energy storage elements (16) of adjacent modules (10) in parallel,

wherein said plurality of module switches (18) or an additional switching arrangement allow for reversing the polarity of a series connection of energy storage elements (16),
wherein each pair of MESDCS (22) comprises a first MESDCS (22-1, 22-2. 22-3) and a second MESDCS (22-4. 22-5, 22-6), wherein

- the first end of the first MESDCS (22-1, 22-2, 22-3) of each of said N pairs of MESDCS is connected to a first common external terminal (32),
- the first end (24) of the second MESDCS (22-4, 22-5, 22-6) of each of said N pairs of MESDCS (22) is connected to a second common external terminal (34), and
- the second ends (26) of the j-th pair of MESDCS (22) are connected to a common j-th phase terminal (28-j), with j = 1, ...,N,

wherein said control system (30) is configured to control the N pairs of MESDCS (22) such that

- a predetermined external voltage or voltage pattern $U_o$ is provided between said first and second common external terminals (32, 34), and
- such that at each of said N common phase terminals (28-j), a corresponding AC phase voltage $U_j$ relative to said first common external terminal (32) is applied, with j =1... N,

wherein said phase voltages $U_j$ can be decomposed into a periodic AC function $U_{P,j}(t)$ and a common, time-dependent offset $U_{off}(t)$ that is common to each of said phase voltages $U_j$, such that $U_j = U_{P,j}(t) + U_{off}(t)$, wherein both voltages $U_{P,j}(t)$ and $U_{off}(t)$ are relative to said first common external terminal (32),
wherein the periodic AC functions $U_{P,j}(t)$ associated with different phase voltages $U_j$ are phase-shifted copies of each other such that for each integers i, j chosen from [1,...,N] with $i \neq j$, and k chosen from [1,...,N-1], the following relation holds:

$$U_{P,i}(t) = U_{P,j}(t + k \cdot T/N),$$

wherein T is the period of said periodic AC functions $U_{P,j}(t)$, and wherein preferably, $U_{P,i}(t) = U_{P,j}(t+ (i-j) \cdot T/N)$, and wherein a pattern of said common, time-dependent offset $U_{off}(t)$ is chosen such that in operation, a total loss, defined as the sum of the energy storage element losses of all modules comprised in any of the N pairs of MESDCS (22) during a full cycle of duration T of said periodic AC functions $U_{P,j}(t)$, is smaller than in an operation with the same periodic AC functions $U_{P,j}(t)$, the same phase currents, and the same external voltage or voltage pattern $U_o$, but without such common, time-dependent offset $U_{off}(t)$.

2. The system (20) of claim 1, wherein the pattern of said time-dependent offset $U_{off}(t)$ is chosen such that in operation, said total loss is smaller than the total loss in a comparative operation with the same periodic AC functions $U_{P,j}(t)$, the same phase currents, and the same external voltage or voltage pattern $U_o$, but without such common, time-dependent offset $U_{off}(t)$, by at least 10%, preferably by at least 15%, and most preferably by at least 20%, and/or

wherein said control system (30) is configured to control, in operation, the N pairs of MESDCS (22) for establishing an external voltage or voltage pattern $U_o$ and a pattern of said common, time-dependent offset $U_{off}(t)$ that are suitable to keep the total loss at or below 150%, preferably at or below 140% and most preferably at or below 130% of a theoretical minimum total loss,
wherein said theoretical minimum total loss corresponds to the total loss that would be obtained if each of the energy storage elements were subjected to a constant average current, said constant average current corresponding to mean of the time-averaged currents associated with each of said energy storage elements in all modules comprised in any of the N pairs of MESDCS (22) during a full cycle of duration T during the actual operation.

3. The system (20) of one of the preceding claims, wherein the control system (30) is configured for providing, in operation, different patterns of said common, time-dependent offset $U_{off}(t)$, said patterns depending on the operation state of said system (20),

wherein preferably, said operation state is, at least in part, **characterized by** one or more of

- the amplitudes and frequencies of periodic AC functions $U_{P,j}(t)$ to be applied to an electrical consumer (36) connected or connectable with said system (20),
- the amplitudes of phase currents to be applied to said electrical consumer (36) connected or connectable with said system (20), or another quantity related thereto,
- the external voltage or voltage pattern $U_o$ provided between said first and second common external terminals (32, 34),
- a phase angle $\varphi$ between the current and the voltage of each phase, and
- a voltage of the storage elements (16) for electrical energy, and/or

wherein preferably, said control system (30) comprises or is connected with a memory storing different patterns of said common, time-dependent offset $U_{off}(t)$ to be selected, in operation, depending on a current operation state, and/or

wherein preferably, said time-dependent offset $U_{off}(t)$ pattern is a periodic function, which has a period of T/N or T/(2N).

4. The system (20) of claim 3, wherein said time-dependent offset $U_{off}(t)$ pattern is chosen such that in a given operation state, defined by

- a set of AC functions $U_{P,j}(t)$ to be applied to an electrical consumer (36) connected or connectable with said system (20),
- the amplitudes of phase currents to be applied to said electrical consumer (36) connected or connectable with said system (20), or another quantity related thereto, and
- the external voltage or voltage pattern $U_o$ provided between said first and second common external terminals (32, 34),

the total loss is at least approximately minimized, or exceeds the minimum total loss obtainable in this given operation state by any different pattern of $U_{off}(t)$ by less than 15 %, preferably less than 10 %.

5. The system (20) of one of the preceding claims, wherein said external voltage $U_o$ is a constant DC voltage, or

wherein said external voltage $U_o$ is a time-dependent pattern, having a period $T_o$, wherein the period T of said periodic AC functions $U_{P,j}(t)$ is preferably an integer multiple of $T_o$, such that $T_o = T/m$, with m being an integer, wherein preferably m = N,

wherein said external voltage $U_o$ is preferably a square wave, alternating between discrete values, and in particular alternating between a predetermined value $U_{o,max}$ and zero, or alternating between $U_{o,max}$, zero, and $-U_{o,max}$, and/or

wherein preferably, said time-dependent pattern for the external voltage $U_o$ is such that in a given operation state, defined by

- a set of AC functions $U_{P,j}(t)$ to be applied to an electrical consumer (36) connected or connectable with said system (20), and
- the amplitudes of phase currents to be applied to said electrical consumer (36) connected or connectable with said system (20),

the total loss is smaller than in an operation with the same periodic AC functions $U_{P,j}(t)$ and the same phase currents, but with an external DC voltage $U_o$ constantly kept at a constant value corresponding to 50% of the amplitude of $U_{P,j}(t)$ and with a time-dependent offset $U_{off}(t)$ optimized for reducing said total loss,

and in particular smaller by at least 5%, preferably by at least 10%, and most preferably by at least 15%.

6. The system (20) of one of the preceding claims, wherein said control system (30) comprises or is connected with a memory storing different time-dependent patterns for the external voltage $U_o$ to be selected, in operation, depending on one or both of

- the amplitudes of periodic AC functions $U_{P,j}(t)$ to be applied to an electrical consumer (36) connected or connectable with said system (20), and
- the amplitudes of phase currents to be applied to said electrical consumer (36) connected or connectable with said system (20), or another quantity related thereto, and/or

wherein $U_{P,j}(t) = A \cdot \sin(\omega t + (j-1) \cdot 2\pi/N)$, with A being a voltage amplitude and $\omega$ an angular frequency.

7. The system (20) of one of one of the preceding claims, wherein said plurality of module switches (18) allow for connecting energy storage elements (16) of adjacent modules (10) in anti-series, wherein the anti-series connection of an energy storage element (16) corresponds to a series connection with reversed polarity, and/or

   wherein for each of said MESDCS (22), an additional switching arrangement is provided allowing for selectively reversing the connection of its first and second ends, respectively, and/or
   wherein said plurality of module switches (18) allow for connecting the energy storage elements of two non-adjacent modules (10), which are separated by one or more modules (10) with deactivated or bypassed energy storage element (16), in parallel, and/or wherein N = 3.

8. An electric vehicle, comprising an electric motor having N terminals for supplying electric power and a system (20) according to one of the preceding claims, wherein each of said common phase terminals (28-1, 28-2, 28-3) is connected with a corresponding one of said terminals of said electric motor,
   wherein preferably, said first and second common external terminals (32, 34) are connected or connectable for providing electrical power to one or more electrical consumers of said vehicle.

9. A method for providing N AC phase voltages $U_j$, with j =1, ... N, and corresponding phase currents to an electrical consumer (36), wherein N is an integer number with $N \geq 2$, using N pairs of modular energy storage direct converter systems (MESDCS) (22),

   wherein each MESDCS (22) comprises a converter arm having a first end (24) and a second end (26) and comprising a plurality of sequentially interconnected modules (10), wherein each module (10) comprises at least two first terminals (12) and at least two second terminals (14), a storage element (16) for electrical energy, in particular a battery or a supercapacitor, and a plurality of module switches (18),
   wherein in operation, an energy storage element loss is associated with each energy storage element (16), wherein said energy storage element loss is at least in part dependent on the current associated with the respective energy storage element (16),
   wherein in each two adjacent modules (10) each of the at least two first terminals (12) of one module (10) is connected either directly or via an intermediate component to a corresponding one of the at least two second terminals (18) of the other module (10), wherein said method comprises operating said plurality of module switches (18) for

   - selectively connecting energy storage elements (16) of adjacent modules (10) in series,
   - selectively deactivating or bypassing the energy storage element (16) of each module (16), and
   - selectively connecting energy storage elements (16) of adjacent modules (10) in parallel,

   wherein said method further comprises operating said plurality of module switches (18) or an additional switching arrangement for reversing the polarity of a series connection of energy storage elements (16),
   wherein each pair of MESDCS (22) comprises a first MESDCS (22-1, 22-2. 22-3) and a second MESDCS (22-4. 22-5, 22-6), wherein

   - the first end of the first MESDCS (22-1, 22-2, 22-3) of each of said N pairs of MESDCS is connected to a first common external terminal (32),
   - the first end (24) of the second MESDCS (22-4, 22-5, 22-6) of each of said N pairs of MESDCS (22) is connected to a second common external terminal (34), and
   - the second ends (26) of the j-th pair of MESDCS (22) are connected to a common j-th phase terminal (28-j), with j = 1, ...,N,

   wherein the method comprises controlling the N pairs of MESDCS (22) such that

   - a predetermined external voltage or voltage pattern $U_o$ is provided between said first and second common external terminals (32, 34), and
   - such that at each of said N common phase terminals (28-j), a corresponding AC phase voltage $U_j$ relative to said first common external terminal (32) is applied, with j =1... N,

wherein said phase voltages $U_j$ can be decomposed into a periodic AC function $U_{P,j}(t)$ and a common, time-dependent offset $U_{off}(t)$ that is common to each of said phase voltages $U_j$, such that $U_j = U_{P,j}(t) + U_{off}(t)$, wherein both voltages $U_{P,j}(t)$ and $U_{off}(t)$ are relative to said first common external terminal (32),

wherein the periodic AC functions $U_{P,j}(t)$ associated with different phase voltages $U_j$ are phase-shifted copies of each other such that for each integers i, j chosen from [1,...,N] with i ≠ j, and k chosen from [1,...,N-1], the following relation holds:

$$U_{P,i}(t) = U_{P,j}(t + k \cdot T/N),$$

wherein T is the period of said periodic AC functions $U_{P,j}(t)$, and wherein preferably, $U_{P,i}(t) = U_{P,j}(t + (i - j) \cdot T/N)$, and wherein a pattern of said common, time-dependent offset $U_{off}(t)$ is chosen such that in operation, a total loss, defined as the sum of the energy storage element losses of all modules comprised in any of the N pairs of MESDCS (22) during a full cycle of duration T of said periodic AC functions $U_{P,j}(t)$, is smaller than in an operation with the same periodic AC functions $U_{P,j}(t)$, the same phase currents, and the same external voltage or voltage pattern $U_o$, but without such common, time-dependent offset $U_{off}(t)$.

10. The method of claim 9, wherein the pattern of said time-dependent offset $U_{off}(t)$ is chosen such that in operation, said total loss is smaller than the total loss in a comparative operation with the same periodic AC functions $U_{P,j}(t)$, the same phase currents, and the same external voltage or voltage pattern $U_o$, but without such common, time-dependent offset $U_{off}(t)$, by at least 10%, preferably by at least 15%, and most preferably by at least 20%, and/or

in which the N pairs of MESDCS (22) are controlled for establishing an external voltage or voltage pattern $U_o$ and a pattern of said common, time-dependent offset $U_{off}(t)$ that are suitable to keep the total loss at or below 150%, preferably at or below 140% and most preferably at or below 130% of a theoretical minimum total loss, wherein said theoretical minimum total loss corresponds to the total loss that would be obtained if each of the energy storage elements were subjected to a constant average current, said constant average current corresponding to mean of the time-averaged currents associated with each of said energy storage elements in all modules comprised in any of the N pairs of MESDCS (22) during a full cycle of duration T during the actual operation.

11. The method of one of claims 9 or 10, wherein in the course of carrying out the method, different patterns of said common, time-dependent offset $U_{off}(t)$ are applied, depending on the operation state,

wherein preferably, said operation state is, at least in part, **characterized by** one or more of

- the amplitudes and frequencies of periodic AC functions $U_{P,j}(t)$ to be applied to said electrical consumer (36),
- the amplitudes of phase currents to be applied to said electrical consumer (36), or another quantity related thereto,
- the external voltage or voltage pattern $U_o$ provided between said first and second common external terminals (32, 34),
- a phase angle φ between the current and the voltage of each phase, and
- a voltage of the storage elements (16) for electrical energy, and/or

wherein preferably, said method is carried out using a control system (30) comprising or connected with a memory storing different patterns of said common, time-dependent offset $U_{off}(t)$ to be selected depending on a current operation state, and/or

wherein preferably, said time-dependent offset $U_{off}(t)$ pattern is a periodic function, which has a period of T/N or T/(2N).

12. The method of claim 11, wherein said time-dependent offset $U_{off}(t)$ pattern is chosen such that in a given operation state, defined by

- a set of AC functions $U_{P,j}(t)$ to be applied to said electrical consumer (36),
- the amplitudes of phase currents to be applied to said electrical consumer (36), or another quantity related thereto, and
- the external voltage or voltage pattern $U_o$ provided between said first and second common external terminals (32, 34),

the total loss is at least approximately minimized, or exceeds the minimum total loss obtainable in this given operation state by any different pattern of $U_{off}(t)$ by less than 15 %, preferably less than 10 %.

13. The method of one of claims 9 to 12, wherein said external voltage $U_o$ is a constant DC voltage, or

wherein said external voltage $U_o$ is a time-dependent pattern, having a period $T_o$, wherein the period T of said periodic AC functions $U_{P,j}(t)$ is preferably an integer multiple of $T_o$, such that $T_o = T/m$, with m being an integer, wherein preferably m = N,
wherein preferably, said external voltage $U_o$ is a square wave, alternating between discrete values, and in particular alternating between a predetermined value $U_{o,max}$ and zero, or alternating between $U_{o,max}$, zero, and $-U_{o,max}$, and/or
wherein preferably, said time-dependent pattern for the external voltage $U_o$ is such that in a given operation state, defined by

- a set of AC functions $U_{P,j}(t)$ to be applied to said electrical consumer (36), and
- the amplitudes of phase currents to be applied to said electrical consumer (36),

the total loss is smaller than in an operation with the same periodic AC functions $U_{P,j}(t)$ and the same phase currents, but with an external DC voltage $U_o$ constantly kept at a constant value corresponding to 50% of the amplitude of $U_{P,j}(t)$ and with a time-dependent offset $U_{off}(t)$ optimized for reducing said total loss,
and in particular smaller by at least 5%, preferably by at least 10%, and most preferably by at least 15%.

14. The method of one claims 9 to 13, wherein said method is carried out using a control system (30) comprising or connected with a memory storing different time-dependent patterns for the external voltage $U_o$ to be selected, in operation, depending on one or both of

- the amplitudes of periodic AC functions $U_{P,j}(t)$ to be applied to said electrical consumer (36), and
- the amplitudes of phase currents to be applied to said electrical consumer (36), or another quantity related thereto, and/or
wherein $U_{P,j}(t) = A \cdot \sin(\omega t + (j-1) \cdot 2\pi/N)$, with A being a voltage amplitude and $\omega$ an angular frequency, and/or
further comprising operating said plurality of module switches (18) for connecting energy storage elements (16) of adjacent modules (10) in anti-series, wherein the anti-series connection of an energy storage element (16) corresponds to a series connection with reversed polarity, and/or
wherein for each of said MESDCS (22), an additional switching arrangement is provided allowing for selectively reversing the connection of its first and second ends, respectively, and/or
further comprising a step of operating said plurality of module switches for connecting the energy storage elements of two non-adjacent modules (10), which are separated by one or more modules (10) with deactivated or bypassed energy storage element (16), in parallel, and/or
wherein said method is carried out using a system (20) according to one of claims 1 to 9.

15. The method of one of claims 9 to 14, wherein said consumer (36) is an electric motor of an electric vehicle, said electric motor having N terminals, wherein each of said common phase terminals (28-1, 28-2, 28-3) is connected with a corresponding one of said terminals of said electric motor,
wherein said first and second common external terminals (32, 34) are preferably connected for providing electrical power to one or more electrical consumers of said vehicle.

**Fig. 1**

**Fig. 2**

**Fig. 3**

**Fig. 4**

**Fig. 5**

**Fig. 6**

**Fig. 7**

Fig. 8a

Fig. 8b

Fig. 8c

Fig. 8d

Fig. 9a

Fig. 9b

Fig. 9c

Fig. 9d

U_0 = 180 V (DC)

—U_P,1 (t)   —U_P,2 (t)   ---U_P,3 (t)

**Fig. 10a**

U_0 = 180 V (DC)

—U_off (t)

**Fig. 10b**

U_0 = 180 V (DC)

—U_1   —U_2   ---U_3

**Fig. 10c**

U_0 = 180 V (DC)

—U_0 - U_1   —U_0 - U_2   ---U_0 - U_3

**Fig. 10d**

Fig. 11a

Fig. 11b

Fig. 11c

Fig. 11d

Fig. 12a

Fig. 12b

Fig. 12c

Fig. 12d

**Fig. 13a**

U_0 = 110 V (DC)

—U_off (t)

**Fig. 13b**

EP 4 481 975 A1

U_0 = 110 V (DC), cos phi 0.9

—U_off (t)

**Fig. 13c**

U_0 (t) = OWB 180/ 0V

—U_0

**Fig. 14a**

U_0 (t) = OWB 180/ 0V

—U_P,1 (t)  —U_P,2 (t)  ---U_P,3 (t)

**Fig. 14b**

Fig. 14c

U_0 (t) = OWB 180/ 0V

—U_off (t)

Fig. 14d

U_0 (t) = OWB 180/ 0V

—U_1 —U_2 ---U_3

Fig. 14e

U_0 (t) = OWB 180/ 0V

—U_0 - U_1    —U_0 - U_2    ---U_0 - U_3

U_0(t) = OWB 180/0V

—U_P,1(t)  ·······U_P,2(t)  —U_P,3(t)  - - U_0(t)

**Fig. 14f**

U_0(t) = OWB 180/0V

—U_P,1(t)  ·······U_P,2(t)  —U_P,3(t)  - - U_0(t)

**Fig. 14g**

**Fig. 15**

Fig. 16

**Fig. 17**

**Fig. 18**

| | Europäisches Patentamt<br>European Patent Office<br>Office européen des brevets | **EUROPEAN SEARCH REPORT** | Application Number<br>**EP 23 18 0423** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | LEISTER LARS ET AL: "Hardware-in-the-Loop Setup for a Modular Multilevel Converter with Integrated Batteries",<br>2022 IEEE 23RD WORKSHOP ON CONTROL AND MODELING FOR POWER ELECTRONICS (COMPEL), IEEE,<br>20 June 2022 (2022-06-20), pages 1-7, XP034153801,<br>DOI: 10.1109/COMPEL53829.2022.9830034<br>[retrieved on 2022-07-22]<br>* the whole document *<br>----- | 1-15 | INV.<br>H02J3/32<br>H02M7/797 |
| | | | TECHNICAL FIELDS<br>SEARCHED (IPC)<br><br>H02J<br>H02M |

The present search report has been drawn up for all claims

| Place of search | Date of completion of the search | Examiner |
|---|---|---|
| Munich | 21 December 2023 | Hanisch, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014110410 A1
- EP 3859964 A1
- EP 38593964 A1
- WO 2010149200 A1